# EUROPEAN PATENT APPLICATION

(11) **EP 1 868 347 A2**
(43) Date of publication of application: **19.12.2007**
(21) Application number: 07252412.7
(22) Date of filing: 14.06.2007
(51) Int. Cl.: H04L 29/06, H04N 7/15

(54) **Associating independent multimedia sources into a conference call**

(30) Priority: 16.06.2006 US 814491 P
(71) Applicant: Ericsson AB, 164 83 Stockholm (SE)
(72) Inventor: Huber, Richard E., Harmony, PA 16037 (US); Punj, Arun, Cranberry Township, PA 16066 (US); Smith, Gregory Howard, Pittsburgh, PA 15206 (US)
(74) Representative: Rees, Simon John Lewis

(57) **Abstract**

A teleconferencing system includes a network. The system includes a content node having content and an address in the network and in communication with the network. The system includes a first user node and a second user node in communication with each other through the network to form a conference. The first user node able to provide the address of the content node through the network to the first and second nodes so the first and second nodes can both access the content of the content node during the conference. A method for providing a teleconference call. A teleconferencing node.

## Description

### CROSS-REFERENCE TO RELATED APPLICATIONS

This application is related to contemporaneously filed U.S. provisional patent applications: serial number 60/814,477, titled "Intelligent Audio Limit Method", by Richard E. Huber, Arun Punj and Peter D. Hill, having attorney docket number FORE-119; serial number 60/814,476, titled "Conference Layout Control and Control Protocol", by Richard E. Huber and Arun Punj, having attorney docket number FORE-120, both of which are incorporated by reference herein.

### FIELD OF THE INVENTION

The present invention is related to a teleconference where a first user node provides an address of a content node having content to other user nodes so the other user nodes can access the content of the content node during a conference call between the user nodes. More specifically, the present invention is related to a teleconference where a first user node provides an address of a content node having content, such as a video stream, and any security authorizations necessary to other user nodes so the other user nodes can access the content of the content node during a conference call between the user nodes.

### BACKGROUND OF THE INVENTION

Let us consider a Vipr (or any multimedia conference or p2p) conversation) in which 2 or more parties are communicating with help of audio/video/data to each other. For example, a video call between A, B and C. Now user A wants B and C to view on their video phone a multimedia stream S which A is currently viewing. For example, this stream S could be a video channel like PBS. The users typically require this feature to be able to discuss the events as being played out on the external multimedia stream S. The present invention allows this to be done with the help of software signaling.

### BRIEF SUMMARY OF THE INVENTION

The present invention pertains to a teleconferencing system. The system comprises a network. The system comprises a content node having content and an address in the network and in communication with the network. The system comprises a first user node and a second user node in communication with each other through the network to form a conference. The first user node able to provide the address of the content node through the network to the first and second nodes so the first and second nodes can both access the content of the content node during the conference.

The present invention pertains to a method for providing a teleconference call. The method comprises the steps of providing an address of a content node having content and an address in a network in communication with the network by a first user node in communication with the network through the network to a second user node in communication with the network. There is the step of accessing the content of the content node by the first and second nodes during a conference call between the first and second nodes through the network.

The present invention pertains to a teleconferencing node for a network with other nodes and a content node having content. The node comprises a network interface which communicates with the other nodes to form the conference. The node comprises a controller which provides the address of the content node through the network to the other nodes so the other nodes can both access the content of the content node during the conference.

### BRIEF DESCRIPTION OF THE SEVERAL VIEWS OF THE DRAWING

In the accompanying drawings, the preferred embodiment of the invention and preferred methods of practicing the invention are illustrated in which:

Figure 1 is a schematic representation of a system for the present invention.

Figure 2 is a schematic representation of a network for the present invention.

Figure 3 is a schematic representation of a videophone connected to a PC and a network.

Figure 4 is a schematic representation of the system for the present invention.

Figures 5a and 5b are schematic representations of front and side views of the videophone.

Figure 6 is a schematic representation of a connection panel of the videophone.

Figure 7 is a schematic representation of a multiscreen configuration for the videophone.

Figure 8 is a block diagram of the videophone.

Figure 9 is a block diagram of the videophone architecture.

Figure 10 is a schematic representation of the system.

Figure 11 is a schematic representation of the system.

Figure 12 is a schematic representation of a system of the present invention.

Figure 13 is a schematic representation of another system of the present invention.

Figure 14 is a schematic representation of an audio mixer of the present invention.

Figure 15 is a block diagram of the architecture for the mixer.

Figure 16 is a block diagram of an SBU.

Figure 17 is a schematic representation of a videophone UAM in a video phone conference.

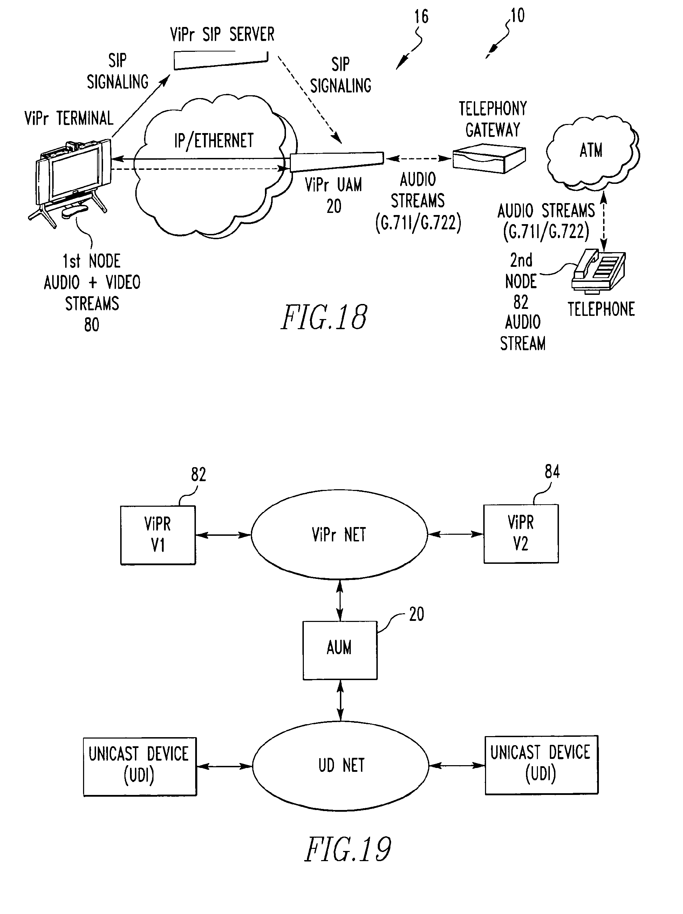

Figure 18 is a schematic representation of a videophone UAM in a two-way telephone call.

Figure 19 is a schematic representation of a network for a mixer.

Figure 20 is a block diagram of the present invention.

### DETAILED DESCRIPTION OF THE INVENTION

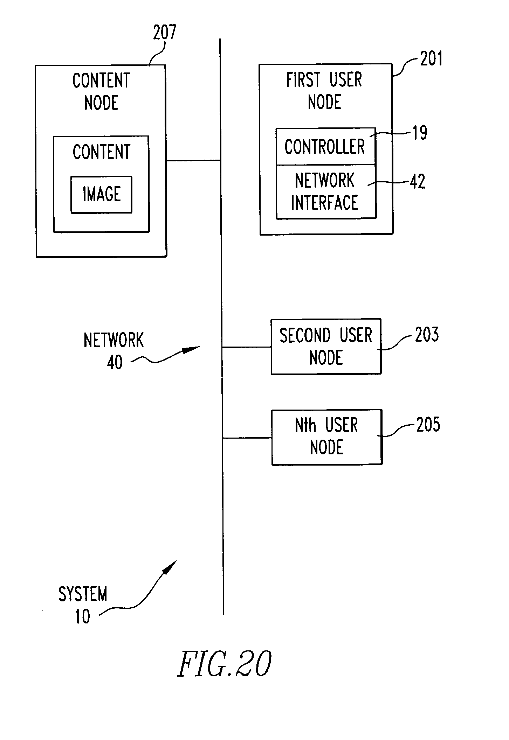

Referring now to the drawings wherein like reference numerals refer to similar or identical parts throughout the several views, and more specifically to figure 20 thereof, there is shown a teleconferencing system 10. The system 10 comprises a network 40. The system 10 comprises a content node 207 having content and an address in the network 40 and in communication with the network 40. The system 10 comprises a first user node 201 and a second user node 203 in communication with each other through the network 40 to form a conference. The first user node 201 able to provide the address of the content node 207 through the network 40 to the first and second nodes so the first and second nodes can both access the content of the content node 207 during the conference.

Preferably, the first user node 201 sends a message having the address to the second user node 203. The address preferably includes a URL. Preferably, the message includes security parameters necessary for the second user node 203 to access the content. The content preferably includes an image. Preferably, the message is a SIP/NOTIFY message which carries signaling containing the URL and security parameters.

The content preferably includes a video stream. Preferably, the system 10 includes a third user node 205 in the conference which also receives the SIP/NOTIFY message from the first user node 201 to access the content.

The SIP/NOTIFY message from the first user node 201 preferably allows the second and third user nodes 203, 205 to access the content without any intervention by the second and third user nodes 203, 205.

The present invention pertains to a method for providing a teleconference call. The method comprises the steps of providing an address of a content node 207 having content and an address in a network 40 in communication with the network 40 by a first user node 201 in communication with the network 40 through the network 40 to a second user node 203 in communication with the network 40. There is the step of accessing the content of the content node 207 by the first and second nodes during a conference call between the first and second nodes through the network 40.

Preferably, the providing step includes the step of sending a message having the address to the second user node 203. The sending step preferably includes the step of sending the message having the address which includes a URL to the second user node 203.

Preferably, the sending step includes the step of sending the message which includes security parameters necessary for the second user node 203 to access the content to the second user node 203.

The providing step preferably includes the step of providing the address of the content node 207 having content which includes an image. Preferably, the sending step includes the step of sending the message which includes a SIP/NOTIFY message which carries signaling containing the URL and security parameters. The providing step preferably includes the step of providing the address of the content node 207 having content which includes a video stream.

Preferably, there is the step of receiving by a third user node 205 in the conference the SIP/NOTIFY message from the first user node 201 to access the content. The sending the message step preferably includes the step of sending the SIP/NOTIFY message from the first user node 201 which allows the second and third user nodes 203, 205 to access the content without any intervention by the second and third user nodes 203, 205.

The present invention pertains to a teleconferencing node for a network 40 with other nodes and a content node 207 having content. The node comprises a network interface 42 which communicates with the other nodes to form the conference for the nodes to talk to each other and view each other live. The node comprises a controller 19 which provides the address of the content node 207 through the network 40 to the other nodes so the other nodes can both access the content of the content node 207 during the conference.

In the operation of the preferred embodiment, this invention addresses a need to associate a well known multimedia stream to a live conference call. For example, there are three participants in a conference A, B and C talking to each other and viewing each other live. (It should be noted there could be 10, 20, 50, 100, 500 or even 1,000 participants to a live conference call.) A observes some real news happening on a video channel, i.e, economic news, and it wants B and C to view this video channel automatically. The new method developed enables B and C to access this video channel without any intervention or action by user B or user C. Multiple such channels or multimedia streams can be associated to the same conference.

This method can also be used to supply encryption/access keys to multimedia streams which would normally not be available to all parties. This invention provides the ability to add external multimedia streams to an existing conference and make those streams available to the entire conference while the conferees are communicating with each other during the live conference.

A stream control message is generated by a node, which includes a party that contains the desired screen layout for conference participants. The stream control message also contains the list of participants, which should receive this message. This stream control message is then sent via a SIP NOTIFY event to the conference focus or host. The conference focus will then add this message to the outgoing message queue of each party contained in this list. The focus will then send this message as it processes all of the queued events for each party. When the message is sent to and received by a particular party, the party will modify its connections to the specified external multimedia streams.

To further illustrate its usage and also signaling mechanism, let us look at the following example.
1. User Fred is viewing a webcast/TV source called Channel_A.
2. User Fred thinks the Channel_A info is important and it must be discussed with users Barney and Wilma.
3. User Fred initiates conference with Fred/Wilma/Barney.
4. User Fred "Shares" information on how to receive Channel_A with Wilma/Barney.

In the above example, at step 3, a conference call is established between Fred/Wilma/Barney using regular VOIP/SIP conferencing techniques (Refer to RFC3261 and RFC 3264 both of which are incorporated by reference herein, and ViPr patent application documentation identified below, and the ViPr and its product information sold by Ericsson. The present invention uses the ViPr as a platform). Step 4 is user hitting Share button on the ViPr videophone for that channel. When a user shares a TV/Webcast channel the software signals to all the participants in the conversation (in this case Wilma/Barney) the attributes required to "tune into" this Channel_A.

The signaling required for this is carried inside a SIP NOTIFY message. Amongst other things it contains following information:

| | |
|---|---|
| URL ( SIP or SIPS or HTTP) | This refers to one of the locations from where the stream can be requested by Wilma/Barney |
| Security Information | This information may contain any security token or authentication mechanism which the users Wilma/Barney could use to receive Channel_A |

It should be noted that if Wilma and Barney are not allowed to view the channel_A because of security policy/Admin policy/censorship policy, they will be denied access to the Channel_A. It should be noted that the channel_A could be a video channel, and audio channel or a data channel, the signaling works the same way for all of them. It should also be noted that a companion channel can be shared in a p2p call or a converse call. Messaging

Let us say Fred is Vipr phone V1, Wilma is on V2 and Barney is on V3.

| **#** | **Fred** | **Wilma** | **Barney** |
|---|---|---|---|
| 1 | Fred shares Channel_A. A SIP-NOTIFY message is sent by V1 to V2 and V3 | | |
| | | | |
| | This notify contains information URL/Security parameters in additional information required to describe external stream attributes. | | |
| 2 | | Wilma receives NOTIFY and initiates regular SIP invite transaction to view the Channel_A | Barney receives NOTIFY and initiates regular SIP invite transaction to view the Channel_A |
| 3 | Users Fred/Barney/Wilma can now discuss Channel_A | | |

The following is a list of some of the possible sources for the 'Image' which can be distributed in the form of an 'Address':
Video Broadcast
TV Show
Web cast
Still Image
Chat Room
Microsoft Word
Excel Spreadsheet
Remote Screen image from VNC or Remote-Desktop
Microsoft Live Meeting
DVD
Audio Stream Cell Phone
Web Page
File

The 'Address' can be a URL or an IP address or anything which can be used to lookup or search via an index.

As an option, this image can be 'proxied' this Image by arranging a copy to be made and this copy distributed in place of the address.

The following applications are all incorporated by reference herein:
U.S. patent application 10/114,402 titled VIDEOPHONE AND METHOD FOR A VIDEO CALL
U.S. patent application 10/871,852 titled AUDIO MIXER AND METHOD
U.S. patent application 11/078,193 titled METHOD AND APPARATUS FOR CONFERENCING WITH STREAM

A node can include a member, party, terminal, or participant of a conference. A conference typically comprises at least 3 nodes, and could have 10 or 20 or even 50 or 100 or 150 or greater nodes.

### Videophone

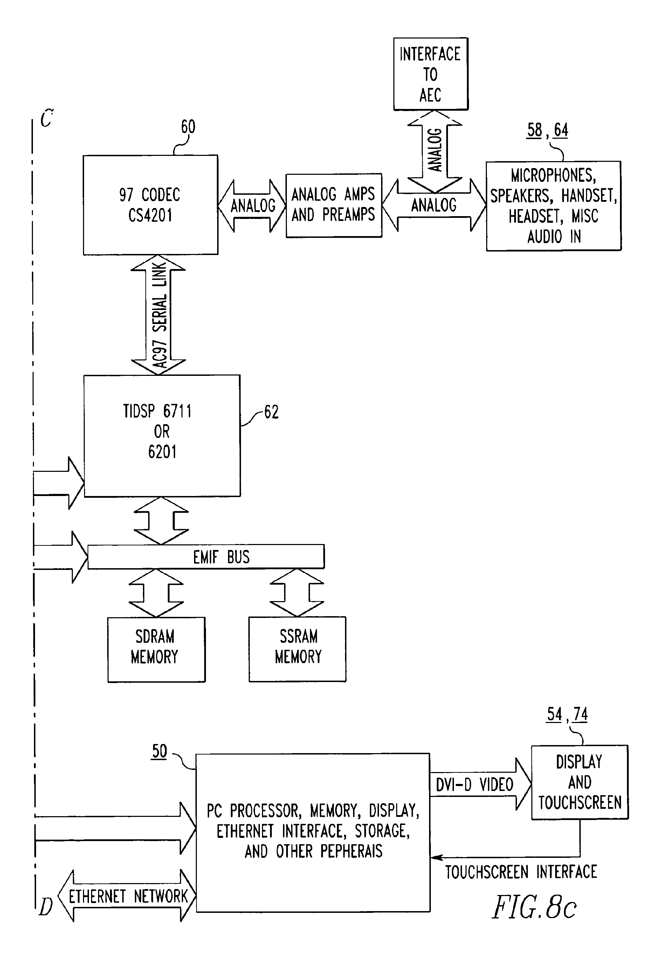

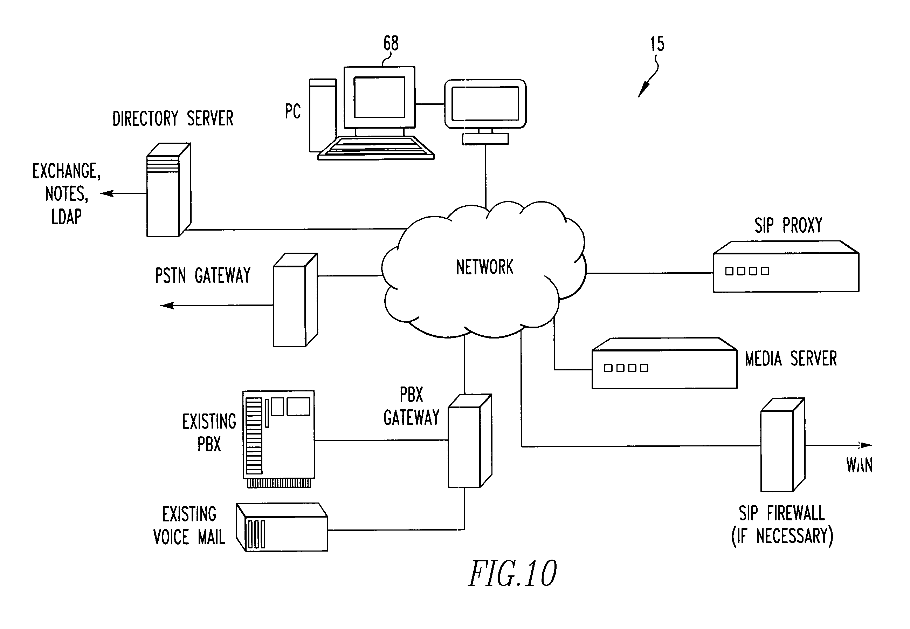

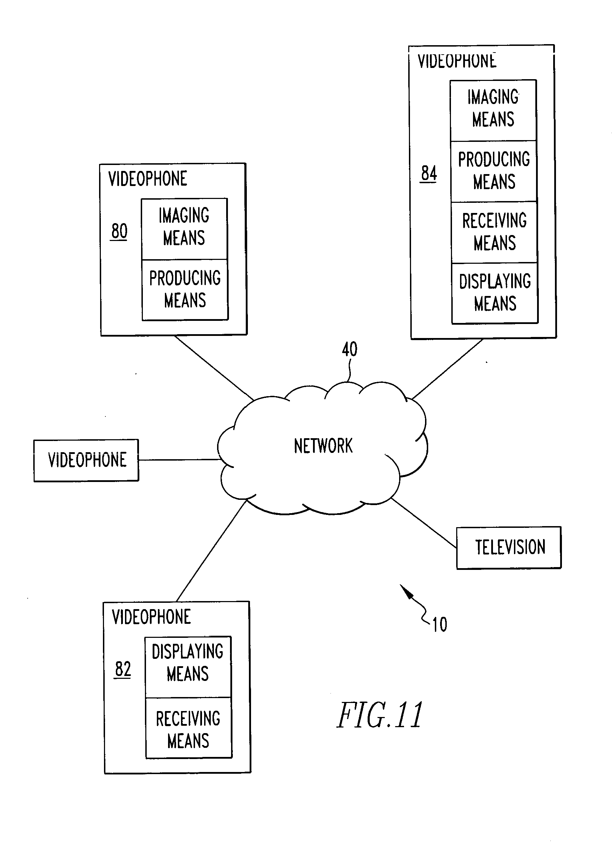

Referring to figures 8, 9, 10 and 11, an imaging device 30, such as a conventional analog camera 32 provided by Sony with S video, converts the images of a scene from the imaging device 30 to electrical signals which are sent along a wire to a video decoder 34, such as a Philips SAA7114 NTSC/PAL/decoder. The video decoder 34 converts the electrical signals to digital signals and sends them out as a stream of pixels of the scene, such as under BT 656 format. The stream of pixels are sent out from the video decoder 34 and split into a first stream and a second stream identical with the first stream. An encoder 36, preferably an IBM eNV 420 encoder, receives the first stream of pixels, operates on the first stream and produces a data stream in MPEG-2 format. The data stream produced by the video encoder 36 is compressed by about 1/50 the size as compared to the data as it was produced at the camera. The MPEG-2 stream is an encoded digital stream and is not subject to frame buffering before it is subsequently packetized so as to minimize any delay. The encoded MPEG-2 digital stream is packetized using RTP by a Field Programmable Gate Array (FPGA) 38 and software to which the MPEG-2 stream is provided, and transmitted onto a network 40, such as an Ethernet 802.p or ATM at 155 megabits per second, using a network interface 42 through a PLX 9054 PCI interface 44. If desired, a video stream associated with a VCR or a television show, such as CNN or a movie, can be received by the decoder 34 and provided directly to the display controller 52 for display. A decoder controller 46 located in the FPGA 38 and connected to the decoder 34, controls the operation of the decoder 34.

Alternatively, if a digital camera 47 is used, the resulting stream that is produced by the camera is already in a digital format and does not need to be provided to a decoder 34. The digital stream from the digital camera 47, which is in a BT 656 format, is split into the first and second streams directly from the camera, without passing through any video decoder 34.

In another alternative, a fire wire camera 48, such as a 1394 interface fire wire camera 48, can be used to provide a digital signal directly to the FPGA 38. The fire wire camera 48 provides the advantage that if the production of the data stream is to be at any more than a very short distance from the FPGA 38, then the digital signals can be supported over this longer distance by, for instance, cabling, from the fire wire camera 48. The FPGA 38 provides the digital signal from the fire wire camera 48 to the encoder 36 for processing as described above, and also creates a low fame rate stream, as described below.

The second stream is provided to the FPGA 38 where the FPGA 38 and software produce a low frame rate stream, such as a motion JPEG stream, which requires low bandwidth as compared to the first stream. The FPGA 38 and a main controller 50 with software perform encoding, compression and packetization on this low frame rate stream and provide it to the PCI interface 44, which in turn transfers it to the network interface 42 through a network interface card 56 for transmission onto the network 40.
The encoded MPEG-2 digital stream and the low frame rate stream are two essentially identical but independent data streams, except the low frame rate data stream is scaled down compared to the MPEG-2 data stream to provide a smaller view of the same scene relative to the MPEG-2 stream and require less resources of the network 40.

On the network 40, each digital stream is carried to a desired receiver videophone 15, or receiver videophones 15 if a conference of more than two parties is involved. The data is routed using SIP. The network interface card 56 of the receive videophone 15 receives the packets associated with first and second data streams and provides the data from the packets and the video stream (first or second) chosen by the main controller to a receive memory. A main controller 50 of the receive videophone 15 with software decodes and expands the chosen received data stream and transfers it to a display controller 52. The display controller 52 displays the recreated images on a VGA digital flat panel display using standard scaling hardware. The user at the receive videophone 15 can choose which stream of the two data streams to view with a touch screen 74, or if desired, chooses both so both large and small images of the scene are displayed, although the display of both streams from the transmitting videophone 15 would normally not happen.
A discussion of the protocols for display is discussed below. By having the option to choose either the larger view of the scene or the smaller view of the scene, the user has the ability to allocate the resources of the system 10 so the individuals at the moment who are more important for the viewer to see in a larger, clearer picture, can be chosen; while those which the user still would like to see, but are not as important at that moment, can still be seen.

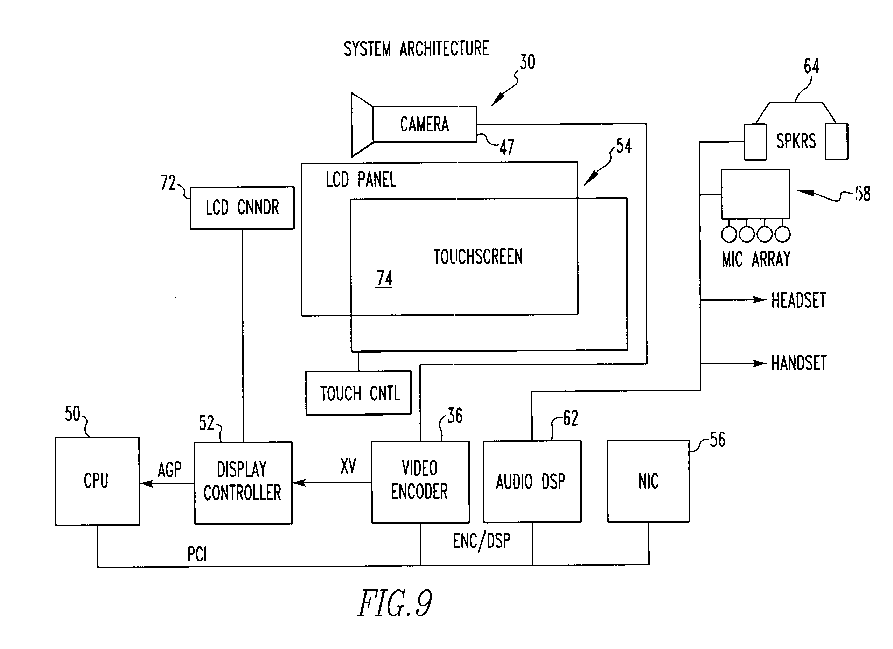

The display controller 52 causes each distinct video stream, if there is more than one (if a conference call is occurring) to appear side by side on the display 54. The images that are formed side by side on the display 54 are clipped and not scaled down so the dimensions themselves of the objects in the scene are not changed, just the outer ranges on each side of the scene associated with each data stream are removed. If desired, the images from streams associated with smaller images of scenes can be displayed side by side in the lower right corner of the display 54 screen. The display controller 52 provides standard digital video to the LCD controller 72, as shown in figure 9. The display controller 52 produced by ATI or Nvidia, is a standard VGA controller. The LCD controller 72 takes the standardized digital video from the display controller 52 and makes the image proper for the particular panel used, such as a Philips for Fujistu panel.

To further enhance the clipping of the image, instead of simply removing portions of the image starting from the outside edge and moving toward the center, the portion of the image which shows no relevant information is clipped. If the person who is talking appears in the left or right side of the image, then it is desired to clip from the left side in if the person is on the right side of the image, or right side in if the person is on the left side of the image, instead of just clipping from each outside edge in, which could cause a portion of the person to be lost. The use of video tracking looks at the image that is formed and analyzes where changes are occurring in the image to identify where a person is in the image. It is assumed that the person will be moving more relative to the other areas of the image, and by identifying the relative movement, the location of the person in the image can be determined. From this video tracking, the clipping can be caused to occur at the edge or edges where there is the least amount of change. Alternatively, or in combination with video tracking, audio tracking can also be used to guide the clipping of the image which occurs. Since the videophone 15 has microphone arrays, standard triangulation techniques based on the different times it takes for a given sound to reach the different elements of the microphone array are used to determine where the person is located relative to the microphone array, and since the location of a microphone array is known relative to the scene that is being imaged, the location of the person in the image is thus known.

The functionalities of the videophone 15 are controlled with a touch screen 74 on the monitor. The touch screen 74, which is a standard glass touchscreen, provides raw signals to the touch screen controller 76. The raw signals are sensed by the ultrasonic waves that are created on the glass when the user touches the glass at a given location, as is well known in the art. The touch screen controller 76 then takes the raw signals and converts them into meaningful information in regard to an X and Y position on the display and passes this information to the main controller 50.

If a television or VCR connection is available, the feed for the television or movie is provided to the decoder 34 where the feed is controlled as any other video signal received by the videophone 15. The television or movie can appear aside a scene from the video connection with another videophone 15 on the display 54.

The audio stream of the scene essentially follows a parallel and similar path with the audio video stream, except the audio stream is provided from an audio receiver 58, such as a microphone, sound card, headset or hand set to a CS crystal 4201 audio interface 60 or such as a Codec which performs analog to digital and digital analog conversion of the signals, as well as controls volume and mixing, which digitizes the audio signal and provides it to a TCI 320C6711 or 6205 DSP 62. The DSP 62 then packetizes the digitized audio stream and transfers the digitized audio stream to the FPGA 38. The FPGA 38 in turn provides it to the PCI interface 44, where it is then passed on to the network interface card 56 for transmission on the network 40. The audio stream that is received by the receive videophone 15, is passed to the FPGA 38 and on to the DSP 62 and then to the audio interface 60 which converts the digital signal to an analog signal for playback on speakers 64.

The network interface card 56 time stamps each audio packet and video packet that is transmitted to the network 40. The speed at which the audio and video that is received by the videophone 15 is processed is quick enough that the human eye and ear, upon listening to it, cannot discern any misalignment of the audio with the associated in time video of the scene.
The constraint of less than 20-30 milliseconds is placed on the processing of the audio and video information of the scene to maintain this association of the video and audio of the scene. To insure that the audio and video of the scene is in synchronization when it is received at a receive videophone 15, the time stamp of each packet is reviewed, and corresponding audio based packets and video based packets are aligned by the receiving videophone 15 and correspondingly played at essentially the same time so there is no misalignment that is discernible to the user at the receiver videophone 15 of the video and audio of the scene.

An ENC-DSP board contains the IBM eNV 420 MPEG-2 encoder and support circuitry, the DSP 62 for audio encoding and decoding, and the PCI interface 44. It contains the hardware that is necessary for full videophone 15 terminal functionality given a high performance PC 68 platform and display 54 system 10. It is a full size PCI 2.2 compliant design. The camera, microphone(s), and speakers 64 interface to this board. The DSP 62 will perform audio encode, decode, mixing, stereo placement, level control, gap filling, packetization, and other audio functions, such as stereo AEC, beam steering, noise cancellation, keyboard click cancellation, or de-reverberation. The FPGA 38 is developed using the Celoxia (Handel-C) tools, and is fully reconfigurable. Layout supports parts in the 1-3 million gate range.

This board includes a digital camera 47 chip interface, hardware or "video DSP" based multi-channel video decoder 34 interface, video overlay using the DVI in and out connectors, up to full dumb frame buffer capability with video overlay.

Using an NTSC or PAL video signal, the encoder 36 should produce a 640 X 480, and preferably a 720 X 480 or better resolution, high-quality video stream. Bitrate should be controlled such that the maximum bits per frame is limited in order to prevent transmission delay over the network 40. The decoder 34 must start decoding a slice upon receiving the first macroblock of data. Some buffering may be required to accommodate minor jitter and thus improve picture.

MPEG-2 is widely used and deployed, being the basis for DVD and VCD encoding, digital VCR's and time shift devices such as TiVo, as well as DSS and other digital TV distribution. It is normally considered to be the choice for 4 to 50 Mbit/sec video transmission. Because of its wide use, relatively low cost, highly integrated solutions for decoding, and more recently, encoding, are commercially available now.

MPEG-2 should be thought of as a syntax for encoded video rather than a standard method of compression. While the specification defines the syntax and encoding methods, there is very wide latitude in the use of the methods as long as the defined syntax is followed. For this reason, generalizations about MPEG-2 are frequently misleading or inaccurate. It is necessary to get to lower levels of detail about specific encoding methods and intended application in order to evaluate the performance of MPEG-2 for a specific application.

Of interest to the videophone 15 project are the issues of low delay encode and decode, as well as network 40 related issues. There are three primary issues in the MPEG-2 algorithm that need to be understood to achieve low delay high quality video over a network 40:
- ≅: The GOP (Group Of Pictures) structure and its effect on delay
- ≅: The effect of bit rate, encoded frame size variation, and the VBV buffer on delay and network 40 requirements
- ≅: The GOP structure's effect on quality with packet loss

### The GOP Structure and Delay:

MPEG-2 defines 3 kinds of encoded frames: I, P, and B. The most common GOP structure in use is 16 frames long:
IPBBPBBPBBPBBPBB. The problem with this structure is that each consecutive B frame, since a B frame is motion estimated from the previous and following frame, requires that the following frames are captured before encoding of the B frame can begin. As each frame is 33msec, this adds a minimum of 66msec additional delay for this GOP structure over one with no B frames. This leads to a low delay GOP structure that contains only I and/or P frames, defined in the MPEG-2 spec as SP@ML (Simple Profile) encoding.
Bit Rate, Encoded Frame Size, and the VBV

Once B frames are eliminated to minimize encoding delay, the GOP is made up of I frames and P frames that are relative to the I frames. Because an I frame is completely intraframe coded, it takes a lot of bits to do this, and fewer bits for the following P frames.

Note that an I frame may be 8 times as large as a P frame, and 5 times the nominal bit rate. This has direct impact on network 40 requirements and delay: if there is a bandwidth limit, the I frame will be buffered at the network 40 restriction, resulting in added delay of multiple frame times to transfer over the restricted segment. This buffer must be matched at the receiver because the play-out rate is set by the video, not the network 40 bandwidth. The sample used for the above data was a low motion office scene; in high motion content with scene changes, frames will be allocated more or less bits depending on content, with some large P frames occurring at scene changes.

To control this behavior, MPEG-2 implements the VBV buffer (Video Buffering Verifier), which allows a degree of control over the ratio between the maximum encoded frame size and the nominal bit rate. By tightly constraining the VBV so that the I frames are limited to less than 2X the size indicated by the nominal bit rate, the added buffering delay can be limited to 1 additional frame time. The cost of constraining the VBV size is picture quality: the reason for large I frames is to provide a good basis for the following P frames, and quality is seriously degraded at lower bit rates (<4Mbit) when the size of the I frames is constrained. Consider that at 2Mbit, the average frame size is 8Kbytes, and even twice this size is not enough to encode a 320X240 JPEG image with good quality, which is DCT compressed similar to an I frame.

Going to I frame only encoding allows a more consistent encoded frame size, but with the further degradation of quality. Low bit rate I frame only encoding does not take advantage of the bulk of the compression capability of the MPEG-2 algorithm.

The MPEG-2 specification defines CBR (Constant Bit Rate) and VBR (Variable Bit Rate) modes, and allows for variable GOP structure within a stream. CBR mode is defined to generate a consistent number of bits for each GOP, using padding as necessary. VBR is intended to allow consistent quality, by allowing variation in encoding bandwidth, permitting the stream to allocate more bits to difficult to encode areas as long as this is compensated for by lower bit rates in simpler sections. VBR can be implemented with two pass or single pass techniques. Variable GOP structure allows, for example, the placement of I frames at scene transition boundaries to eliminate visible compression artifacts. Due to the low delay requirement and the need to look ahead a little bit in order to implement VBR or variable GOP, these modes are of little interest for the videophone 15 application.

Because P and B frames in a typical GOP structure are dependant on the I frame and the preceding P and B frames, data loss affects all of the frames following the error until the next I frame. This also affects startup latency, such as when flipping channels on a DSS system 10, where the decoder 34 waits for an I frame before it can start displaying an image. For this reason, GOP length, structure, and bit rate need to be tuned to the application and delivery system 10. In the case of real time collaboration using IP, an unreliable transport protocol such as RTP or UDP is used because a late packet must be treated as lost, since you can't afford the delay required to deal with reliable protocol handshaking and retransmission. Various analysis has been done on the effect of packet loss on video quality, with results showing that for typical IPB GOP structures, a 1% packet loss results in 30% frame loss. Shorter GOP structures, and ultimately I frame only streams (with loss of quality), help this some, and FEC (Forward Error Correction) techniques can help a little when loss occurs, but certainly one of the problems with MPEG-2 is that it is not very tolerant of data loss.

A GOP structure called Continuous P frame encoding addresses all of the aforementioned issues and provides excellent video quality at relatively low bit rates for the videophone 15. Continuous P encoding makes use of the ability to intra-frame encode macro-blocks of a frame within a P frame. By encoding a pseudo-random set of 16X16 pixel macro-blocks in each frame, and motion-coding the others, the equivalent of I-frame bits are distributed in each frame. By implementing the pseudo-random macro-block selection to ensure that all blocks are updated on a frequent time scale, startup and scene change are handled in a reasonable manner.

IBM has implemented this algorithm for the S420 encoder, setting the full frame DCT update rate to 8 frames (3.75 times per second). The results for typical office and conference content is quite impressive. The encoding delay, encoded frame size variation, and packet loss behavior is nearly ideal for the videophone 15. Review of the encoded samples shows that for scene changes and highly dynamic content that encoder 36 artifacts are apparent, but for the typical talking heads content of collaboration, the quality is very good.

High-quality audio is essential prerequisite for effective communications. High-quality is defined as full-duplex, a 7 kHz bandwidth, (telephone is 3.2kHz), > 30 dB signal-to-noise ratio, no perceivable echo, clipping or distortion. Installation will be very simple involving as few cables as possible. On board diagnostics will indicate the problem and how to fix it. Sound from the speakers 64 will be free of loud pops and booms and sound levels either too high or too low.

An audio signal from missing or late packets can be "filled" in based on the preceding audio signal. The audio buffer should be about 50 ms as a balance between network 40 jitter and adding delay to the audio. The current packet size of 320 samples or 20 ms could be decreased to decrease the encode and decode latency. However, 20 ms is a standard data length for RTP packets.

Some of the processes described below are available in commercial products. However, for cost and integration reasons, they will be implemented on a DSP 62. In another embodiment, a second DSP 62 can perform acoustic echo cancellation instead of just one DSP 62 performing this function also.

The audio system 10 has a transmit and a receive section. The transmit section is comprised of the following:
Microphones

One of the principal complaints of the speaker phone is the hollow sound that is heard at the remote end. This hollow sound is due to the room reverberation and is best thought of as the ratio of the reflected (reverberant) sound power over the direct sound power. Presently, the best method to improve pickup is to locate microphones close to the talker and thus increase the direct sound power. In an office environment, microphones could be located at the PC 68 monitor, on the videophone 15 terminal and at a white board.

### Automatic Gain Control

The gain for the preamplifier for each microphone is adjusted automatically such that the ADC range is fully used. The preamp gain will have to be sent to other audio processes such as AEC and noise reduction.

### CODEC

In its simplest form, this is an ADC device. However, several companies such as Texas Instruments and Analog Devices Inc have CODECS with analog amplifiers and analog multiplexers. Also, resident on the chip is a DAC with similar controls. The automatic gain control described in the previous section is implemented in the CODEC and controlled by the DSP 62.

### Noise Reduction

Two methods of noise reduction can be used to improve the SNR. The first method is commonly called noise gating that turns on and off the channel depending on the level of signal present. The second method is adaptive noise cancellation (ANC) and subtracts out unwanted noise from the microphone signal. In office environment, it would be possible use ANC to remove PA announcements, fan noise and in some cases, even keyboard clicks.

Noise reduction or gating algorithms are available in commercial audio editing packages such as Cool Edit and Goldwave that can apply special effects, remove scratch and pop noise from records and also remove hiss from tape recordings.

### Acoustic Echo Cancellation

Echo is heard when the talker's voice returns to the talker after more than 50 ms. The echo is very distracting and thus needs to be removed. The two sources of echo are line echo and acoustic echo. The line echo is due to characteristics of a two-line telephone system 10. The PSTN removes this echo using a line echo canceller (LEC). When using a speaker phone system 10, acoustic echo occurs between the telephone speaker and the microphone. The sound from the remote speaker is picked by the remote microphone and returned to talker. Acoustic echo cancellation (AEC) is more difficult than LEC since the room acoustics are more complicated to model and can change suddenly with movement of people. There are many AEC products ranging from the stand-alone devices such as ASPI EF1210 to Signal Works object modules optimized to run on DSP 62 platforms.

### Automixing

Automixing is selecting which microphone signals to mix together and send the monaural output of the mixer to the encoder 36. The selection criteria is based on using the microphone near the loudest source or using microphones that are receiving sound that is above a threshold level. Automixers are commercially available from various vendors and are used in teleconferencing and tele-education systems.

### Encoding

To reduce data transmission bandwidth, the audio signal is compressed to a lower bit rate by taking advantage of the typical signal characteristics and our perception of speech. Presently, the G.722 codec offers the best audio quality (7 kHz bandwidth @ 14 bits) at a reasonable bit rate of 64kbits/sec.

### RTP Transmission

The encoded audio data is segmented into 20 msec segments and sent as RealTime Protocol (RTP) packets. RTP was specifically designed for realtime data exchange required for VoIP and teleconference applications.

The receive section is:
RTP Reception

RTP packets containing audio streams from one or more remote locations are placed in their respective buffers. Missing or late packets are detected and that information is passed to the Gap Handler. Out of order packets are a special case of late packets and like late packets are likely to be discarded. The alternative is to have a buffer to delay playing out the audio signal for at least one packet length. The size of the buffer will have to be constrained such that the end-to-end delay is no longer than 100ms.

### Decoding

The G.722 audio stream is decoded to PCM samples for the CODEC. Gap Handling

Over any network, RTP packets will be lost or corrupted. Therefore, the Gap Handler will "fill in" the missing data based on the spectrum and statistics of the previous packets. As a minimum, zeros should be padded in the data stream to make up data but a spectral interpolation or extrapolation algorithm to fill in the data can be used.

### Buffering

Network jitter will require buffering to allow a continuous audio playback. This buffer will likely adjust its size (and hence latency) based on a compromise between the short-term jitter statistics and the effect of latency.

### Rate Control

The nominal sample rate for a videophone 15 terminal is 16 kHz. However, slight differences will exist and need to be handled. For example, suppose that videophone 15 North samples at precisely 16,001 Hz while videophone 15 South samples at 15,999 Hz. Thus, the South terminal will accumulate 1 more samples per second than it outputs to the speaker and the North terminal will run a deficit of equal amount. Long-term statistics on the receiving buffer will be able to determine what the sample rate differential is and the appropriate interpolation (for videophone 15 North) or decimation (for videophone 15 South) factor can be computed.

### Volume Control

Adjusting the volume coming from the speakers 64 is typically done by the remote listeners. A better way might be to automatically adjust the sound from the speakers 64 based on how loud it sounds to the microphones in the room. Other factors such as the background noise and the listener's own preference can be taken into account. Stereo Placement

Remote talkers from different locations can be placed in the auditory field. Thus, a person from location A would consistently come from the left, the person from location B from the middle and the person from location C from the right. This placement makes it easier to keep track of who is talking.

### Speakers

The quality of the sound to some extent is determined by the quality of the speakers 64 and the enclosure. In any case, self-amplified speakers 64 are used for the videophone 15 terminal.

### Differentiation

Present conferencing systems such as the PolyCom Soundstation offer satisfactory but bandlimited full-duplex audio quality. However, the bandwidth is limited to 3500 Hz and the resulting sound quality strains the ear and especially in distinguishing fricative sounds.

Videophone 15 extends the bandwidth to 7 kHz and automixes multiple microphones to minimize room reverberation. When three or more people are talking, each of the remote participants will be placed in a unique location in the stereo sound field. Combined with the high-quality audio pick-up and increased bandwidth, a conference over the network 40 will quickly approach that of being there in person.

The audio system 10 uses multiple microphones for better sound pick-up and a wideband encoder (G.722) for better fidelity than is currently offered by tollgrade systems. Additionally, for multiple party conferences, stereo placement of remote talkers will be implemented and an acoustic echo cancellation system 10 to allow hands free operation. Adjustment of volume in the room will be controlled automatically with a single control for the end user to adjust the overall sound level.

In the videophone 15 network 40, a gateway 70 connects something non-SIP to the SIP environment. Often there are electrical as well as protocol differences. Most of the gateways 70 connect other telephone or video conference devices to the videophone 15 system 10.

Gateways 70 are distinguished by interfaces; one side is a network 40, for videophone 15 this is Ethernet or ATM. The external side may be an analog telephone line or RS-232 port. The type, number and characteristics of the ports distinguishes one gateway 70 from another. On the network 40 side, there are transport protocols such as RTP or AAL2, and signaling protocols such as SIP, Megaco or MGCP.

On the external side, there may be a wide variety of protocols depending on the interfaces provided. Some examples would be ISDN (Q.931) or POTS signaling. PSTN gateways 70 connect PSTN lines into the videophone 15 system 10 on site. PBX gateways 70 allow a videophone 15 system 10 to emulate a proprietary telephone to provide compatibility to existing onsite PBX. POTS gateways 70 connect dumb analog phones to a videophone 15 system 10. H.323 gateways 70 connect an H.323 system 10 to the SIP based videophone 15 system 10. This is a signaling-only gateway 70 -- the media server 66 does the H.261 to MPEG conversion.

Three enabling technologies for the videophone 15 are the Session Initiation Protocol (SIP), the Session Description Protocol (SDP) and the Real-time Transport Protocol (RTP), all of which are incorporated by reference herein.

SIP is a signaling protocol for initiating, managing and termination voice and video sessions across packet networks.

SDP is intended for describing multimedia sessions for the purposes of session announcement, session invitation, and other forms of multimedia session initiation. SIP uses SDP to describe media sessions.

RTP provides end-to-end network 40 transport functions suitable for applications transmitting real-time data, such as audio, video or simulation data, over multicast or unicast network 40 services. SIP uses RTP for media session transport.

The videophone 15 can perform conferences with three or more parties without the use of any conferencing bridge or MCU. This is accomplished by using ATM point to multipoint streams as established by SIP. More specifically, when the MPEG-2 stream and the low frame rate stream is packetized for transmission onto the network 40, the header information for each of the packets identifies the addresses of all the receive videophones 15 of the conference, as is well known in the art. From this information, when the packets are transmitted to the network 40, SIP establishes the necessary connectivity for the different packets to reach their desired videophone 15 destinations.

As an example of a conference that does not use any conferencing bridge, let there be 10 videophones 15 at discreet locations who are parties to a conference. Each videophone 15 produces an audio based stream, and an MPEG-2 based stream and a low frame rate based stream. However, each videophone 15 will not send any of these streams back to itself, so effectively, in a 10 party conference of videophones 15, each communicate with the nine other videophones 15. While it could be the case that the videophone 15 communicates with itself, to maximize the bandwidth utilization, the video produced by any videophone 15 and, if desired, the audio produced by a videophone 15 can be shown or heard as it essentially appears to the other videophones 15, but through an internal channel, which will be described below, that does not require any bandwidth utilization of the network 40.

In the conference, each videophone 15 receives nine audio based streams of data. Three MPEG-2 based streams of data and six low frame rate based streams of data. If desired, the receiver could choose up to nine streams of low frame rate based streams so the display 54 only shows the smaller images of each videophone 15, or up to four of the MPEG-2 based streams of data where the display 54 is filled with four images from four of the videophones 15 of the conference with no low frame rate based streams having their image shown, since there is no room on the display 54 for them if four MPEG-2 based streams are displayed. By having three MPEG-2 based streams shown, this allows for six of the low frame rate based streams to be shown. Each of the streams are formed as explained above, and received as explained above at the various videophones 15.

If more than four large images are desired to be shown of a conference, then the way that this is accomplished is additional videophones 15 are connected together so that the displays of the different videophones 15 are lined up side by side, as shown in figure 7. One videophone 15 can be the master, and as each additional videophone is added, it becomes a slave to the master videophone 15, which controls the display 54 of the large and small images across the different videophones 15.

In terms of the protocols to determine who is shown as a large image and who is shown as a small image on the displays of the videophones 15 of the conference, one preferred protocol is that the three most recent talkers are displayed as large, and the other parties are shown as small. That is, the party who is currently talking and the two previous talkers are shown as large. Since each videophone 15 of the conference receives all the audio based streams of the conference, each videophone 15 with its main controller 50 can determine where the talking is occurring at a given moment and cause the network interface card 56 to accept the MPEG-2 stream associated with the videophone 15 from which talking is occurring, and not accept the associated low frame rate stream. In another protocol, one videophone 15 is established as the lead or moderator videophone 15, and the lead videophone 15 picks what every other videophone 15 sees in terms of the large and small images. In yet another protocol, the choice of images as to who is large and who is small is fixed and remains the same throughout the conference. The protocol can be that each videophone 15 can pick how they want the images they receive displayed. Both the MPEG-2 based stream and the low frame rate stream are transmitted onto the network 40 to the receive videophones of the conference. Accordingly, both video based streams are available to each receive videophone 15 to be shown depending on the protocol for display 54 that is chosen.

In regard to the audio based streams that are transmitted by each videophone 15, to further effectively use the bandwidth, and to assist in the processing of the audio by decreasing the demands of processing placed on any transmit videophone 15 or receive videophone 15, an audio based stream can only the transmitted by a videophone 15 when there is audio above a predetermined decibel threshold at the transmit videophone 15. By only transmitting audio based streams that have a loud enough sound, with the assumption that the threshold would be calibrated to be met or exceeded when talking is occurring, this not only eliminates extraneous background noise from having to be sent and received, which essentially contributes nothing but uses bandwidth, but assists in choosing the MPEG-2 stream associated with the talking since only the audio streams that have talking are being received.

As mentioned above, if a given videophone 15 desires to see its own image that is being sent out to the other videophones 15, then the low frame rate stream that is formed by the FPGA 38 is sent to a local memory in the videophone 15, but without any compression, as would be the case for the low frame rate stream that is to be packetized and sent onto the network 40 from the videophone 15. From this local memory, the main processor with software will operate on it and cause it to be displayed as a small image on the display 54.

Furthermore, the videophone 15 provides for the control of which audio or video streams that it receives from the network 40 are to be heard or seen. In situations where the conference has more parties than a user of the videophone 15 wishes to see or hear, the user of the videophone 15 can choose to see only or hear only a subset of the video or audio streams that comprise the total conference. For instance, in a 100 party conference, the user chooses to see three of the video streams as large pictures on the screen, and 20 of the video streams as a small images on the screen, for a total of 23 pictures out of the possible 100 pictures that could be shown. The user of the videophone 15 chooses to have the three loudest talkers appear as the large pictures, and then chooses through the touch screen 74 of the parties in the conference, which are listed on a page of the touch screen, to also be displayed as the small pictures. Other protocols can be chosen, such as the 20 pictures that are shown as small pictures can be the last 20 talkers in the conference starting from the time the conference began and each party made his introductions. By controlling the number of video streams shown, organization is applied to the conference and utilization of the resources of the videophone 15 are better allocated.

In regard to the different pictures that are shown on the screen, a choice can be associated with each picture. For example, one picture can be selected by a moderator of the conference call, two of the pictures can be based on the last/loudest talkers at a current time of the conference, and the other picture can be associated with a person the user selects from all the other participants of the conference. In this way, every participant or user of the conference could potentially see a different selection of pictures from the total number of participants in the conference. The maximum bandwidth that is then needed is for one video stream being sent to the network, and four video streams being received from the network, regardless of the number of participants of the conference.

In regard to the audio streams, the limitation can be placed on the videophone 15 that only the audio streams associated with the three loudest talkers are chosen to be heard, while their respective picture is shown on the screen. The DSP 62 can analyze the audio streams that are received, and allow only the three audio streams associated with the loudest speakers to be played, and at the same time, directing the network interface 42 to only receive the first video streams of the large pictures associated with the three audio streams having the loudest talkers. Generally speaking, the more people that are talking at the same time, the more confusion and less understanding occurs. Thus, controls by the user are exercised over the audio streams to place some level of organization to them.

As part of the controls in regard to the audio streams, as mentioned above, each videophone 15 will only send out an audio stream if noise about the videophone 15 is above a threshold. Preferably, the threshold is dynamic and is based on the noise level of the three loudest audio streams associated with the three loudest talkers at a given time. This follows, since for the audio stream to be considered as one of the audio streams with the three loudest talkers, the noise level of other audio streams must be monitored and identified in regard to their noise level. The DSP 62 upon receiving the audio streams from the network interface 42 through the network 40, reviews the audio stream and identifies the three streams having the loudest noise, and also compares the noise level of the three received audio streams which have been identified with the three loudest talkers with the noise level of the scene about the videophone 15. If the noise level from the scene about the videophone 15 is greater than any one of the audio streams received, then the videophone 15 sends its audio stream to the network 40. This type of independent analysis by the DSP 62 occurs at each of the videophones in the conference, and is thus a distributive analysis throughout the conference. Each videophone, independent of all the other videophones, makes its own analysis in regard to the audio streams it receives, which by definition have only been sent out by the respective videophone 15 after the respective videophone 15 has determined that the noise about its scene is loud enough to warrant that at a given time it is one of the three loudest. Each videophone 15 than takes this received audio stream information and uses it as a basis for comparison of its own noise level. Each videophone 15 is thus making its own determination of threshold.

An alternative way of performing this distributed analysis is that each videophone, after determining what it believes the threshold should be with its DSP 62, can send this threshold to all the other videophones of the conference, so all of the videophones can review what all the other videophones consider the threshold to be, and can, for instance, average the thresholds, to identify a threshold that it will apply to its scene.

By using the technique of choosing the video streams of the three loudest talkers, there may be moments when parties start talking loudly all at once, and creating confusion and inability for understanding, but by doing so it raises the noise in the threshold level, resulting in very shortly the elimination of the audio streams that are not producing as much noise as others, so that only the audio streams of the three largest talkers will once again be chosen and heard, with the others not being chosen, and thus removing some of the noise that the other audio streams might be contributing. This implies that there may be times when more than three audio streams are received by the videophone 15 since more than three videophones may have a noise level above the threshold at a given moment, allowing each of such videophones to produce an audio stream at that time and to send it to the network 40. However, as just explained, once the threshold is changed, the situation will stop. This distributed analysis in regard to audio streams, is not limited to the videophone 15 described here but is also applicable to any type of an audio conference, whether there is also present video streams or not.

Consistent with the emphasis on conserving the use of bandwidth, and to send only what is necessary to conserve the bandwidth, clipping of an image occurs at the encoder 36 rather than at the receive videophone 15. In the instances where the transmit videophone 15 is aware of how its image will appear at the receive videophones 15, the encoder 36 clips the large image of the scene before it is transmitted, so there is that much less of the image to transmit and utilize bandwidth. If clipping is to occur at the receiver videophone 15, then the main processor with software will operate on the received image before it is provided to the display controller 52.

A second camera can be connected to the videophone 15 to provide an alternative view of the scene. For instance, in a room, the first camera, or primary camera, can be disposed to focus on the face of the viewer or talker. However, there may be additional individuals in the room which the person controlling the videophone 15 in the room wishes to show to the other viewers at the receive videophones 15. The second camera, for instance, can be disposed in an upper corner of the room so that the second camera can view essentially a much larger portion of the room than the primary camera. The second camera feed can be provided to the decoder 34. The decoder 34 has several ports to receive video feeds. Alternatively, if the stream from the second camera is already digitized, it can be provided to the processing elements of the videophone 15 through similar channels as the primary camera. Preferably, each videophone 15 controls whatever is sent out of it, so the choice of which camera feed is to be transmitted is decided by the viewer controlling the videophone 15. Alternatively, it is possible to provide a remote receive videophone 15 the ability to control and choose which stream from which camera at a given videophone 15 is to be transmitted. The control signals from the control videophone 15 would be transmitted over the network 40 and received by the respective videophone 15 which will then provide the chosen stream for transmission. Besides a second camera, any other type of video feed can also be provided through the videophone 15, such as the video feed from a DVD, VCR or whiteboard camera.

In a preferred embodiment, the videophone 15 operates in a peak mode. In the peak mode, the videophone 15 camera takes a still image of the scene before it and transmits this image to other videophones 15 that have been previously identified to receive it, such as on a list of those videophones 15 on its speed dial menu. Alternatively, in the peak mode, the still image that is taken is maintained at the videophone 15 and is provided upon request to anyone who is looking to call that videophone 15. Ideally, as is consistent with the preferred usage of the videophone 15, each videophone 15 user controls whatever is sent out of the videophone 15, and can simply choose to turn off the peak mode, or control what image is sent out. When an active call occurs, the peak mode is turned off so there is no conflict between the peak mode and the active call in which a continuous image stream is taken by the camera. The peak mode can have the still image of the scene be taken at predetermined time intervals, say at one-minute increments, five-minute increments, 30-minute increments, etc. In the peak mode, at a predetermined time before the still image is taken, such as five or ten seconds before the image is taken, an audible queue can be presented to alert anyone before the camera that a picture is about to be taken and that they should look presentable. The audible queue can be a beep, a ping or other recorded noise or message. In this way, when the peak mode is used, a peak into the scene before the camera of the videophone 15 is made available to other videophones 15 and provides an indication of presence of people in regard to the camera to the other videophones 15.

As another example of a presence sensor, the location of the automatic lens of the camera in regard to the field before it can act as a presence sensor. When no one is before the camera, then the automatic lens of the camera will focus on an object or wall that is in its field. When a person is before the camera, the automatic lens will focus on that person, which will cause the lens to be in a different position than when the person is not before the lens. A signal from the camera indicative of the focus of the lens can be sent from the camera to the FPGA 38 which then causes the focus information to be sent to a predetermined list of videophone 15 receivers, such as those on the speed dial list of the transmit videophone 15, to inform the receive videophones 15 whether the viewer is before the videophone 15 to indicate that someone is present.

The videophone 15 also provides for video mail. In the event a video call is attempted from one videophone 15 to another videophone 15, and the receive videophone 15 does not answer the video call after a predetermined time, for instance 4 rings, then a video server 66 associated with the receive videophone 15 will respond to the video call. The video server 66 will answer the video call from the transmit videophone 15 and send to the transmit videophone 15 a recorded audio message, or an audio message with a recorded video image from the receive videophone 15 that did not answer, which had been previously recorded. The video server 66 will play the message and provide an audio or an audio and video queue to the caller to leave their message after a predetermined indication, such as a beep. When the predetermine indication occurs, the caller will then leave a message that will include an audio statement as well as a video image of the caller. The video and audio message will be stored in memory at the video server 66. The message can be as long as desired, or be limited to a predetermined period of time for the message to be defined. After the predetermined period of time has passed, or the caller has finished and terminated the call, the video server 66 saves the video message, and sends a signal to the receive videophone 15 which did not answer the original call, that there is a video message waiting for the viewer of the receive videophone 15. This message can be text or a video image that appears on the display 54 of the receive videophone 15, or is simply a message light that is activated to alert the receive videophone 15 viewer that there is video mail for the viewer.

When the viewer wishes to view the video mail, the viewer can just choose on the touch screen 74 the area to activate the video mail. The user is presented with a range of mail handling options, including reading video mail, which sends a signal to the video server 66 to play the video mail for the viewer on the videophone 15 display 54. The image stream that is sent from the video server 66 follows the path explained above for video based streams to and through the receive videophone 15 to be displayed. For the videophone 15 viewer to record a message on the video server 66 to respond to video calls when the viewer does not answer the video calls, the viewer touches an area on the touch screen 74 which activates the video server 66 to prompt the viewer to record a message either audio or audio and video, at a predetermined time, which the viewer than does, to create the message.

The videophone 15 provides for operation of the speakers 64 at a predetermined level without any volume control by the user. The speakers 64 of the videophone 15 can be calibrated with the microphone so that if the microphone is picking up noise that is too loud, then the main controller 50 and the DSP 62 lowers the level of audio output of the speakers 64 to decrease the noise level. By setting a predetermined and desirable level, the videophone 15 automatically controls the loudness of the volume without the viewer having to do anything.

The videophone 15 can be programmed to recognize an inquiry to speak to a specific person, and then use the predetermined speech pattern that is used for the recognition as the tone or signal at the receive videophone 15 to inform the viewer at the receive videophone 15 a call is being requested with the receive videophone 15. For instance, the term "Hey Craig" can be used for the videophone 15 to recognize that a call is to be initiated to Craig with the transmit videophone 15. The viewer by saying "Hey Craig" causes the transmit videophone to automatically initiate a call to Craig which then sends the term "Hey Craig" to the receive videophone 15 of Craig. Instead of the receive videophone 15 of Craig ringing to indicate a call is being requested with Craig, the term "Hey Craig" is announced at the videophone 15 of Craig intermittently in place of the ringing that normally would occur to obtain Craig's attention. The functionality to perform this operation would be performed by the main controller 50 and the DSP 62. The statement "Hey Craig" would be announced by the viewer and transmitted, as explained above, to the server 66. The server 66, upon analyzing the statements, would recognize the term as a command to initiate a call to the named party of the command. The server 66 would then utilize the address information of the videophone 15 of Craig to initiate the call with the videophone 15 of Craig, and cause the signal or tone to be produced at the videophone 15 of Craig to be "Hey Craig".

As is well known in the art, the encoder 36 is able to identify the beginning and the end of each frame. As the encoder 36 receives the data, it encodes the data for a frame and stores the data until the frame is complete. Due to the algorithm that the encoder 36 utilizes, the stored frame is used as a basis to form the next frame. The stored frame acts as a reference frame for the next frame to be encoded. Essentially this is because the changes to the frame from one frame to the next are the focus for the encoding, and not the entire frame from the beginning. The encoded frame is then sent directly for packetization, as explained above, with out any buffering, except for packetization purposes, so as to minimize any delay. Alternatively, as the encoder 36 encodes the data for the frame, to even further speed the transmission of the data, the encoded data is ordered on for packetization purposes without waiting for the entire frame to be encoded. The data that is encoded is also stored for purposes of forming the frame, for reasons explained above, so that a reference frame is available to the encoder 36. However, separately, the data as it is encoded is sent on for packetization purposes and forms into a frame as it is also being prepared for packetization, although if the packet is ready for transmission and it so happens only a portion of the frame has been made part of the packet, the remaining portion of the frame will be transmitted with a separate packet, and the frame will not be formed until both packets with the frame information are received at the receive videophone 15.

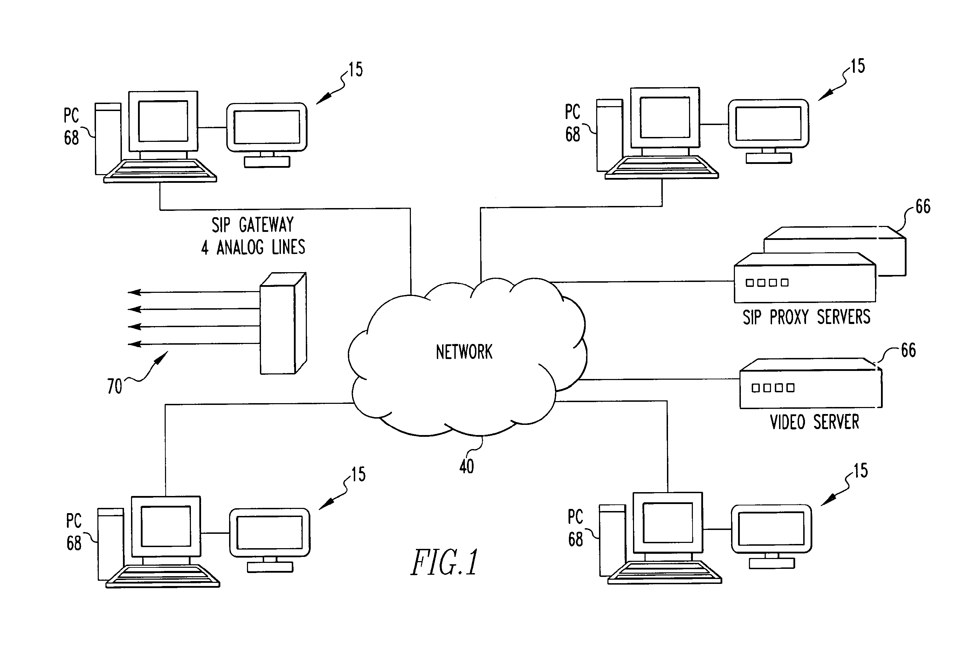

Referring to figure 1, videophones 15 are connected to the network 40. Videophones 15 support 10/100 ethernet connections and optionally ATM 155Mbps connections, on either copper or Multimode Fiber. Each videophone 15 terminal is usually associated with a users PC 68. The role of the videophone 15 is to provide the audio and Video aspects of a (conference) call. The PC 68 is used for any other functions. Establishing a call via the videophone 15 can automatically establish a Microsoft Netmeeting session between associated PCs 68 so that users can collaborate in Windows-based programs, for example, a Power Point presentation, or a spread sheet, exchange graphics on an electronic whiteboard, transfer files, or use a text-based chat program, etc. The PC 68 can be connected to Ethernet irrespective of how the videophone 15 terminal is connected. It can, of course, also be connected to an ATM LAN. The PC 68 and the associated transmit videophone 15 communicate with each other through the network 40. The PC 68 and the associated transmit videophone 15 communicate with each other so the PC 68 knows to whom the transmit videophone 15 is talking. The PC 68 can then communicate with the PC 68 of the receive videophone 15 to whom the transmit videophone 15 is talking.
The PC 68 can also place a call for the videophone 15.

Most of the system 10 functionality is server based, and is software running of the videophone 15 Proxy Server, which is preferably an SIP Proxy Server. One server 66 is needed to deliver basic functionality, a second is required for resilient operation, i.e. the preservation of services in the event that one server 66 fails. Software in the servers and in the videophone 15 terminal will automatically swap to the back up server 66 in this event. With this configuration, videophone 15 terminals can make or receive calls to any other videophone 15 terminal on the network 40 and to any phones, which are preferably SIP phones, registered on the network.

Media Servers provide a set of services to users on a set of media streams. The media server 66 is controlled by a feature server 66 (preferably an feature server 66). It is employed to provide sources and sinks for media streams as part of various user-invocable functions. The services provided on the media server 66 are:
Conference Bridging
Record and Playback
Transcoding
Tones and announcements

The media server 66 is a box sitting on the LAN or WAN. In general, it has no other connections to it. It is preferably an SIP device. The feature servers are in the signaling path from the videophone 15 terminals. The media path, however, would go direct from the media server 66 to the appliance.

In operation, the user may ask for a function, such as videomail. The feature server 66 would provide the user interface and the signaling function, the media server 66 would provide the mechanisms for multimedia prompts (if used) and the record and playback of messages.

To enable a videophone 15 terminal to make or accept calls to any non protocol or standard (such as SIP) (video) phones, a Gateway 70, such as an SIP gateway, is added. A four analogue line gateway 70 can be connected either directly to the PSTN, or to analogue lines of the local PBX. The normal rules for provisioning outgoing lines apply. Typically one trunk line is provisioned for every six users, i.e. it assumes any one user uses his phone to dial an external connection 10 minutes out of any hour. If the videophone 15 terminal is to act as an extension on a current PBX as far as incoming calls are concerned then one analogue line is needed for every videophone 15.

TV sources, such as CNN, are available to the videophone 15 user. The videophone 15 Video Server 66 enables this service. The Server 66 supports the connection of a single Video channel that is then accessible by any videophone 15 user on the network 40. The Video channel is the equivalent of two normal conference sessions. A tuner can set the channel that is available. A new videophone 15 Video Server 66 should be added to the configuration for each different channel the customer wishes to have available simultaneously.

The videophone 15 server 66 (preferably SIP) also contains a database for user data, including a local cache of the users contact information. This database can be synchronized with the users main contact database. Synchronization can be used, for instance, with Outlook/Exchange users and for Lotus Notes users. A separate program that will run on any NT based server 66 platform does synchronization. Only one server 66 is required irrespective of the number of sites served.

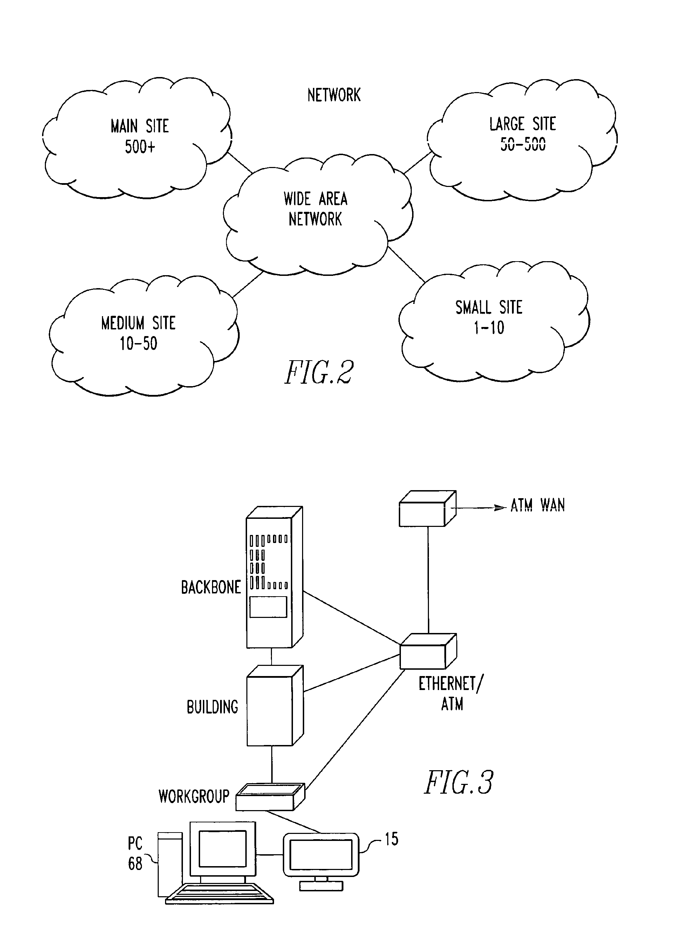

As shown in figure 2, usually videophone 15 terminals will be distributed across several sites, joined by a Wide Area network 40. One server 66 is sufficient to serve up to 100+ videophones 15 on a single campus. As the total number of videophones 15 on a site increases, at some stage more servers need to be installed.

With videophones 15 distributed across several sites, it is possible for them to operate based on central servers, but this is not a recommended configuration, because of the WAN bandwidth used and the dependence on the WAN. Preferably, each site has at least one server 66, which is preferably an SIP server 66 when SIP is used. For the more cautious, the simplest and easiest configuration is if each site has duplicated servers, preferably each being SIP servers. However using a central server 66 as the alternate to remote site servers will work too.

Videophones 15 anywhere in the network 40 can make PSTN or PBX based outgoing calls from a single central gateway 70. However, if there is the need for the videophone 15 to also be an extension on a local PBX to accept incoming calls then a PSTN gateway 70 needs to be provided at each location. There needs to be a port on the gateway 70 for every videophone 15 on that site.

A central CNN server 66 can distribute TV channel to any videophone 15 on the network 40. Nevertheless, it may be preferable to include site specific servers than take that bandwidth over the WAN.

A videophone 15 is available to connect to either a 10/100 Ethernet network 40 or an ATM network 40 at 155 Mbits/sec (with both Fiber and Copper options). An ATM connected videophone 15 uses an IP control plane to establish the ATM addresses of the end-points for a call, and then uses ATM signaling to establish the bearer channel between those end points. The bearer channel is established a Switched Virtual Circuit (SVC), with the full QoS requirements specified.

Each video stream is between 2Mbps and 6Mbps duplex as determined by settings and bandwidth negotiation. As the display means can show more than a single video stream, the overall required connection bandwidth to each videophone increases with the number of parties in the call. Transmit end clipping ensures that the maximum required bandwidth is approximately 2.5 times the single video stream bandwidth in use. If there are several videophones 15 on a site, the normal telephone ratio between users and trunks will apply to videophone 15 sessions. In other words, a videophone 15 user is expected to talk on average to two other people in each call, i.e. two streams and will use the videophone 15 on average 10 minutes in the hour. For the average encoding rate of 3Mbps, this gives a WAN bandwidth need of 6Mbps which can be expected to support up to 6 users.

As shown in figure 3, the videophone 15 operates on a 'p' enabled Ethernet network 40, when there is a low density of videophone 15 terminals. The videophone 15 system 10 will establish an SVC across the ATM portion of the network 40 linking the two videophones 15 together, and make use of the 'p' enabled Ethernet to ensure sufficient Quality of Service is delivered over the Ethernet part of the connection.

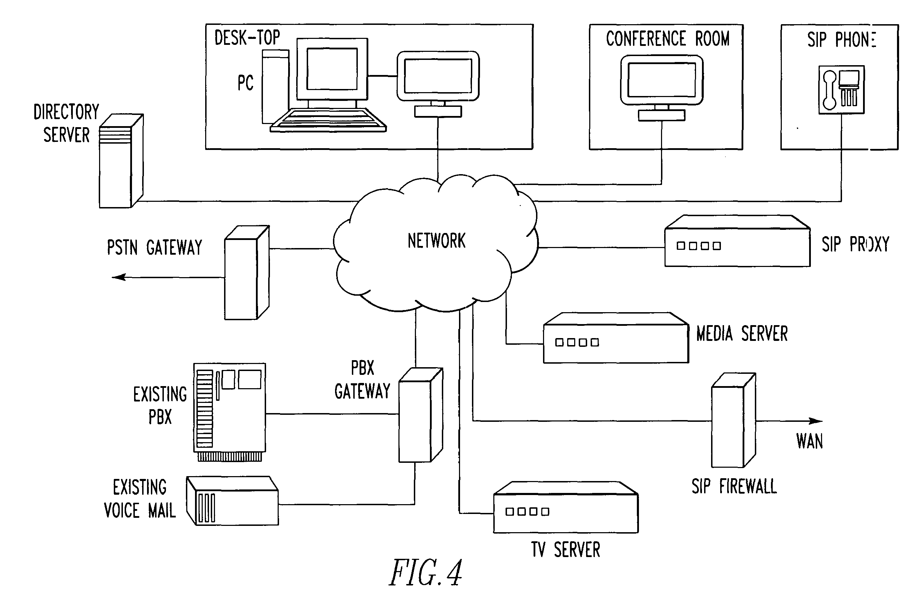

The essential elements of the videophone 15 system 10 are shown in Figure 4. Together they create multi-media collaboration tools greatly enhancing the ability of geographically dispersed teams to interact. Such teams are increasingly common in almost every large enterprise, yet the tools to help them work effectively and efficiently are little changed from a decade ago and are in many respects unsatisfactory. Videophone 15 addresses the many issues of existing systems in a comprehensive way to create a discontinuous improvement in remote collaboration. It is enabled by newly available technology, differentiated by Quality of Service and the right mix of functions, made useable by the development of an excellent user interface, and designed to be extensible by using a standards based architecture.

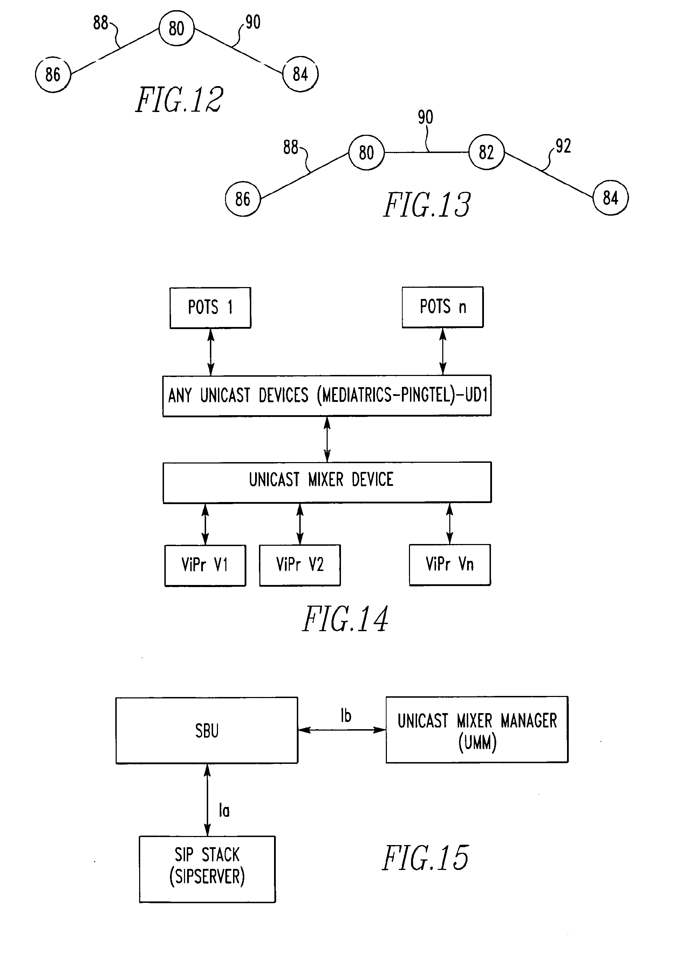

The audio and video streams, as explained above, are transmitted from the originating videophone 15 to terminating videophones 15 on the network using, for example, well known SIP techniques. SIP messages may be routed across heterogeneous networks using IP routing techniques. It is desirable for media streams in heterogeneous networks to have a more direct path. Preferably, in instances where the originating videophone 15 of a conference is connected to an Ethernet, and a terminating videophone 15 of the conference is connected to an ATM network, as shown in figure 15, the following addressing of the packets that cross the network between the originating and terminating videophones occurs. The originating videophone 15 sends a packet onto the Ethernet to which it is an communication with the originating videophone's IP address. The packet reaches an originating gateway 80 which links the Ethernet with the ATM network. At the originating gateway 80, the IP address of the originating videophone 15 is saved from the packet, and the originating gateway 80 adds to the packet the ATM address of the originating gateway 80 and sends the packeton to the terminating videophone 15. When the terminating videophone 15 receives the packet, it stores the ATM address of the originating gateway 80 from the packet, and sends back to the originating gateway 80 a return packet indicating that it has received the packet, with the ATM address of the terminating videophone 15. The originating gateway 80, when it receives the return packet saves the ATM address of the terminating videophone 15 and adds the IP address of the originating gateway 80 to the return packet. The return packet is then sent from the originating gateway 80 back to the originating videophone 15.

In this way, the specific addresses of each critical node of the overall path between and with the originating videophone 15 and the terminating videophone 15 is known to each critical node of the path. At minimum, each node on the path knows the address of the next node of the path, and if desired, additional addresses can be maintained with the respective packets as they move along the path so each node of the path knows more in regard to addresses of the critical nodes then the next node that the packet goes to. This is because as the packet moves from node to node, and specifically in the example, from the originating videophone 15 to the originating gateway 80 to the terminating videophone 15 and then back to the originating gateway 80 and then to the originating videophone 15, each node saves the critical address of the previous node from which to the respective packet was received, and introduces its own address relative to the type of network the next node is part of. Consequently, all the critical addresses that each node needs to send the packet onto the next node are distributed throughout the path.

This example of transferring a packet from an originating videophone 15 on an Ethernet to a terminating videophone 15 on an ATM network also is applicable for the reverse, where the originating terminal or videophone 15 is in communication with an ATM network and the terminating videophone 15 is in communication with an Ethernet.

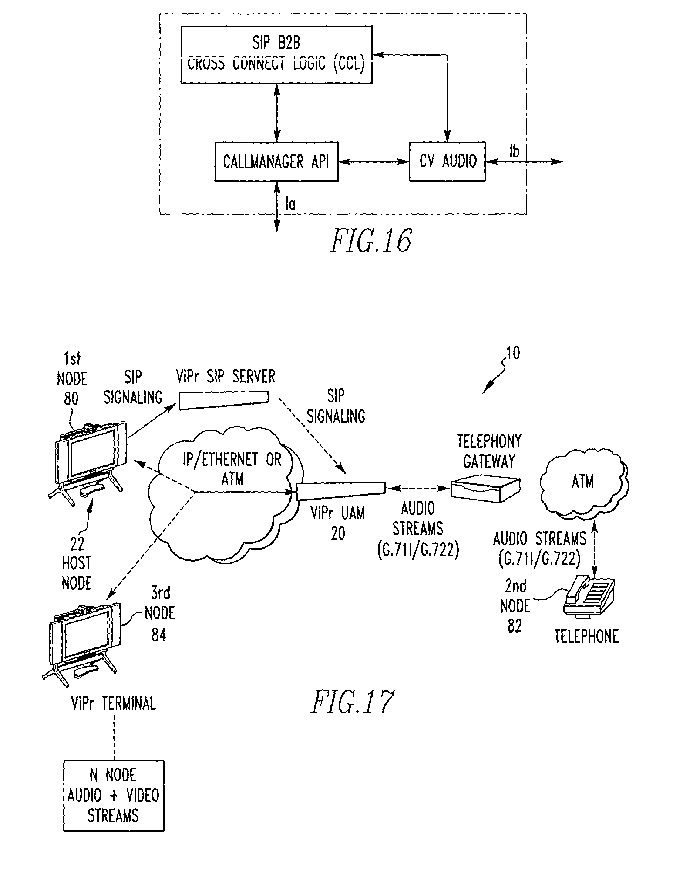

Similarly, the path can involve an originating videophone 15 in communication with an Ethernet and a terminating videophone 15 in communication with an Ethernet where there is an ATM network traversed by the packet in between, as shown in figure 16. In such a case, there would be two gateways at each edge where there is an interface between the Ethernet and the ATM network. As explained above, the process would simply add an additional node to the path, where the originating gateway 80 introduces its own ATM address to the packet and sends it to the terminating gateway 82 which saves the originating gateway's ATM address and adds the terminating gateway's IP address to the packet, which it then sends onto the terminating videophone 15 on the Ethernet. With the return packet, the same thing happens in reverse, and each gateway saves the respective address information from the previous gateway or terminating videophone 15, and adds its own address to the return packet that it sends on ultimately to the originating videophone 15, with the originating gateway 80 and the originating videophone 15 saving the ATM address of the terminating gateway 82 or the originating gateway 80, respectively, so the respective addresses in each link of the overall path is stored to more efficiently and quickly send on subsequent packets of a connection.

For instance, the main controller 50 and the network interface 42 of the videophone 15 can add the address of the videophone 15 to each packet that it sends to the network 40 using the same techniques that are well known to one skilled in the art of placing SIP routing information (or whatever standard routing information is used) with the packet. The network interface 42 also stores the address information it receives from a packet from a node on the network in a local memory. Similarly, for a gateway on the network 40, the same can be applied. As is well known, the gateway has controlling means and a data processing means for moving a packet on to its ultimate destination. A network interface 42 and a main controller 50 of the controlling mechanism of the gateway, operating with well known techniques in regard to SIP routing information, stores address information received from a packet and places its own address information relative to a network 40 in which it is going to send the packet, with the packet. For example, the address information of the gateway, or the videophone 15, can be placed in a field that is in the header portion associated with the packet. It should be noted, that while the example speaks to the use of videophones 15 as terminating and originating sources, any type of device which produces and receives packets can be used as a node in this overall scheme.

The Virtual Presence Video-Phone (videophone) 15 is a desk top network 40 appliance that is a personal communications terminal. It replaces the phone on the users desk, providing all the features of a modern PBX terminal with the simplicity of user interface and ease of use afforded by videophones' 15 large touch screen 74.

Videophone 15 adds the video dimension to all interpersonal communications, changing the experience to that of virtual presence. In the past the quality of video on video conference systems has not been high enough for the technology to be transparent. videophone 15 is the first personal videophone to deliver high enough video quality to create the right experience. For effective real time video communication not only has the picture quality to be close to broadcast TV quality, but the latency must be kept very low. Lip Sync is also important if a natural conversation is to flow. All these issues have been addressed in the design of the videophone 15 video subsystem. videophone 15 uses the latest encoder 36 and decoder 34 technology configured specifically for this application. In other words, videophone 15 gets as close as possible to 'being there'.

Videophone 15 also greatly improves on conventional speaker phone performance through the use of a high fidelity, near CD quality audio channel that delivers crystal clear voice. Stereo audio channels provide for spatial differentiation of each participants audio. Advanced stereo echo cancellation cancels not only all the sound from the units speakers 64 but enables the talker to carry on a conversation at normal conversational levels, even when in a noisy room.

Videophone 15 directly supports the establishment of up to 4 remote party (i.e. 5 way) video conference calls and or up to 10 party audio conference calls. Each user has visibility on the availability of all other members of his/her work group. The videophone 15 preferably uses Session Initiation Protocol (SIP) as a means of establishing, modifying and clearing multi-stream multi-media sessions. Videophone 15 can establish an audio call to any other SIP phone or to any other phone via a gateway 70.

Videophone 15 places high demands on the network 40 to which it is attached. Videophone 15 video calls demand a network 40 that can supply continuous high bandwidth, with guarantees on bandwidth, latency and jitter. Marconi plc specializes in providing networks that support high Quality of Service applications. A conference room version of videophone 15 is also available.

The videophone 15 is a communications terminal (platform) that has the capability of fully integrating with a user's PC 68, the computing platform. A videophone 15 application for the PC 68 provides a number of integration services between the PC 68 and the associated videophone 15 terminal. This will include the automatic establishment of NetMeeting sessions between the parties in a videophone 15 conference call, if so enabled, for the purpose of sharing applications such as whiteboard, or presentations, etc. other capabilities including "drag and drop" dialing by videophone 15 of a number on the PC 68.

A set of servers, preferably each being SIP servers, provide call control and feature implementation to the network 40 appliances. These are software servers running on standard computing platforms, capable of redundancy. These servers also run a local copy of the users contact information database and users preference database. Applications available on these servers provide access to corporate or other LDAP accessible directories.

A synchronization server 66 maintains synchronization between the users main contact database and the local copy on the server 66 (preferably SIP). Outlook Exchange or Lotus Notes synchronization is supported. A set of Media Gateways 70 are used to the analogue or digital PSTN network 40. A set of Media Gateways 70 interfaces to the most common PABX equipment, including the voice mail systems associated with those PABX*'* s.

The Media server 66 provides a number of services to the videophone 15 terminal. It acts as a Bridging-Conference server 66 for video conference over 4 parties, if desired. It can also provide transcoding between the videophone 15 standards and other common audio or video formats, such as H320/H323. It can provide record and playback facilities, enabling sessions to be recorded and playback. It can provide the source of tones and announcements.

A Firewall according to the standard being used, such as an SIP Firewall, is required to securely pass the dynamically created RTP streams under the control of standard proxy software (such as SIP proxy software). A TV server 66 acts as a source of TV distribution, allowing videophone 15 users to select any channel supported, for example CNN.

Videophone 15 is for Ethernet and ATM desktops. The videophone 15 terminal will support end to end ATM SVC's and use them to establish connections with the requisite level of Quality of Service. Videophone 15 will also support IP connectivity via LANE services. For this to guarantee the required QoS, LANE 2 is required. The videophone 15 provides ATM passthrough to an ATM attached desk-top PC 68, or an ATM to Ethernet pass through to attach the PC 68 via Ethernet.

The videophone 15 requires the support of end to end QoS. For an Ethernet attached videophone 15 the user connection needs to support 802.1p, DiffServ and/or IntServ or better. If the destination is reachable via an ATM network 40, an Ethernet to ATM gateway 70 will be provided. The SIP proxy server 66 and SIP signaling will establish the ATM end-point nearest to the target videophone 15 terminal, i.e. its ATM address if it is ATM attached, or the ATM Ethernet gateway 70 that is closest. Signaling will establish an SVC across the ATM portion of the network 40 with the appropriate QoS. This SVC will be linked to the specific Ethernet flow generating the appropriate priority indication at the remote end.

The videophone 15 product line consists of several end terminals (appliances), a set of servers which provide features not built into the appliances, and a set of gateways 70 that connect the products to existing facilities and outside PSTN services. The basic functionality provided by the system 10 is:
- ≅: Telephony Services, with video available on all "on-net" calls, very high quality audio and video
- ≅: Multiparty Conference Services, audio and video, ad hoc or prescheduled, completely self-serve, fully integrated into the telephony services
- ≅: Presence Services - with a variety of tools to determine availability for collaboration
- ≅: Shared Surface Services - electronic whiteboard, application sharing, document sharing, presentation broadcast
- ≅: Other value added services such as broadcast video (Mikes message to the troops) TV distribution.
Online interactive training, etc. Session recording services is also available, if desired.

Videophone 15 is a telephone with dramatic new functionality, not a computer trying to do what a telephone does. This allows full concurrent use of a computer for the things that it is good at, while providing a flexible but application specific appliance for communication. The user interface and physical design can be tuned for this application, providing an instant on, highly reliable communications device like current phones, something that the PC 68 will never be.
This approach also provides control over the operating environment of the device, eliminating the support problems related to PC 68 hardware and software configuration issues.

Human factor studies have demonstrated time after time that audio quality is the single most important factor for effective, transparent communication. While a handset is necessary, excellent quality hands free audio including Acoustic Echo Cancellation (AEC), Automatic Gain Control (AGC), wide band audio capability (G.722 8kHz bandwidth or better), stereo output, and integration with the PC 68 sound output provides new levels of effective remote collaboration. A high quality microphone array, designed and processed to limit tin-can effects is also present.

A simple, clean, intuitive, fully flexible platform for visual output and button/selection input is used. In the first videophone model, this is a high quality TFT full color screen, 17" diagonal 16 by 9 screen with 1260 x 768 resolution or better, overlaid with a medium resolution high life touch-panel. A bright (>200 nit), extended viewing angle (>+-60°) active matrix panel is used to display full motion video for comfortable viewing in an office environment. Larger, brighter, faster, higher contrast, and higher viewing angle screens can be used.

The videophone 15 uses a TFT color LCD, having PC 68 like architecture with a VGA type display 54 interface based on an Intel Celeron/440 MMX and a Lynx VGA controller.

A high quality digital 480 line progressive scan camera is used to provide 30 frames per second of at least 640x480 video. Videophone 15 uses MPEG2 encoding taking advantage of the video encoder 36 technology for set top boxes. A variety of different bit rates can be generated, allowing the video quality to adapt to the available resources for one-to-one calls, and to the highest quality participant for one or many-to-many calls. An integrated high quality camera module is positioned close to the screen, with an external video input (Firewire) provided to allow the use of additional cameras, VCRs, or other video sources.

An existing 10/100BaseT Ethernet connection to the desktop is the only connection necessary for communication to the LAN, WAN, PC 68 desktop, and various servers, proxies, and gateways 70. Time critical RTP streams for audio and video are marked with priority using 802.1p, supplying the mechanism within the Ethernet domain of the LAN for QoS. DiffServ is also supported, with RSVP as an option. In order to eliminate the need for additional building wiring to the desktop, the videophone 15 will include a small 10/100 Ethernet switch, allowing the existing desktop port to be used for both the phone and the PC 68.

Videophone 15 also supports an ATM interface. The interface is based on using the HE155 Mbits/sec card with either a fiber or copper interface. The videophone 15 provides an ATM pass-through port to connect to an ATM connected desktop or to connect an Ethernet connected PC 68 to the ATM connected videophone 15.

The cost and performance tradeoffs for the conference room environment are obviously different than those for the desktop. Video projection, multiple cameras with remote Pan/Tilt/Zoom, multiple microphones, multiple video channels, rear projection white boards, and other products appropriate for the conference room environment are integrated into a conference room videophone 15. The interworking of the conference room environment and the desktop is seamless and transparent. This environment will make heavy use of OEM equipment that is interfaced to the same infrastructure and standards in place for the desktop. The hardware design is essentially the same, with additional audio support for multiple microphones, and additional video support for multiple cameras and displays. Alternatively, a PC 68 application, either mouse or touch screen 74 driven, if the PC 68 has as touch screen 74, that links to a low cost SIP phone can be used. For those desktops and other places that do not require the collaboration capabilities described above, a standard phone can be used that works with the system 10 without requiring additional wiring or a PBX.

Using the SIP (Session Initiation Protocol) standard, the terminal devices are supported by one or more servers that provide registration, location, user profile, presence, and various proxy services. These servers are inexpensive Linux or BSD machines connected to the LAN.

The videophone 15 is the phone, so a key set of PBX functions must be provided, including transfer, forward, 3 (and 4, 5, ...) party conferencing, caller ID +, call history, etc. Some of these features may be built on top of a SIP extension mechanism called "CPL", which is actually a language to provide call handling in a secure, extensible manner.

The videophone 15 provides for active presence and instant messaging. Perhaps the most revolutionary tool for improving day to day distributed group collaborative work, presence allows people to know who's in and what they're doing. It provides the basis for very low overhead calling, eliminating telephone tag and traditional number dialing, encouraging groups to communicate as a group rather than through the disjoint one-to-one phone conversations that are common now. Integration with Instant Messaging (real time email) provides a no delay way of exchanging short text messages, probably making use of the PC 68 keyboard for input.

The videophone 15 provides for distributed/redundant architecture. This is the phone system 10 and it must be reliable. It should also be able to be centrally managed with local extensions, with distributed servers providing "instant" response to all users. Each of the different SIP proxy functions, for instance, if SIP is used, will be deployed such that they can be arbitrarily combined into a set of physical servers, with redundant versions located in the network 40.

Microsoft NetMeeting is used for shared surface and shared application functionality. Computer/Telephony Interface (CTI) for the PC 68 and PDA, with features such as integrated contact lists, auto-dialing of selected phone numbers or names, calendar logging of call history, automatic entry of contacts, etc. can be used.

SIP presents challenges to firewalls because the RTP flows use dynamically allocated UDP ports, and the address/port information is carried in SIP messages. This means the Firewall has to track the SIP messages, and open "pin holes" in the firewall for the appropriate address/port combinations.
Further, if NAT is employed, the messages must be altered to have the appropriate translated address/ports. There are two ways to accomplish such a task. One is to build the capability into the firewall. The top 3 firewall vendors (Checkpoint, Network Associates and Axxent) provide this. An alternative is to have a special purpose firewall that just deals with SIP in parallel with the main firewall. There are commercial versions of such a firewall, for example, that of MicroAppliances. It should be noted that SIP or NetMeeting are preferred embodiments that are available to carry out their necessary respective functionality. Alternatives to them can be used, if the necessary functionality is provided.

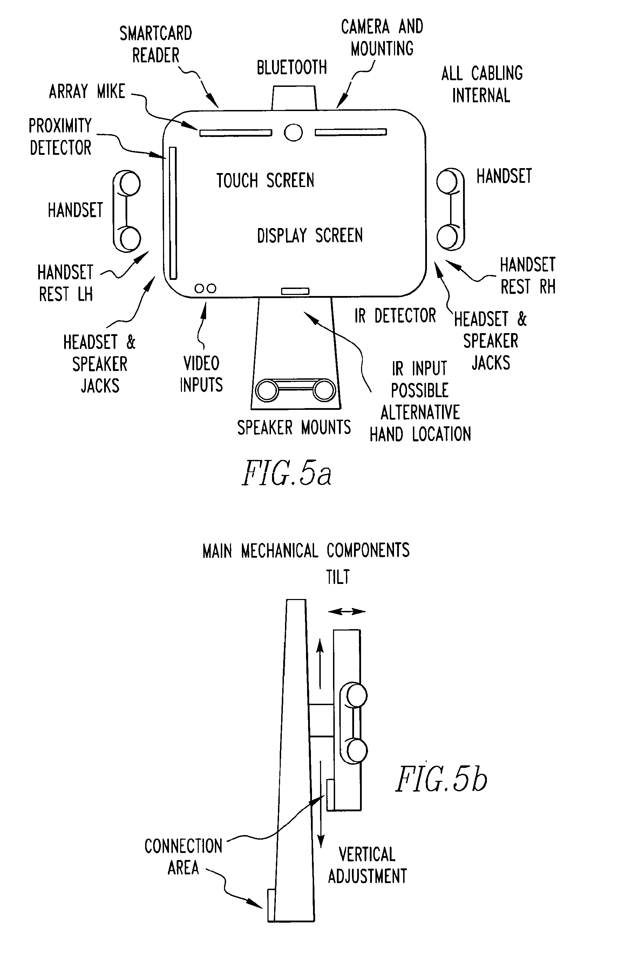

Figure 5 shows the main physical components of the videophone 15 terminal. The stand provides a means of easily adjusting the height of the main display 54 panel and of securing the panel at that height. The range of height adjustment is to be at least 6 inches of travel to accommodate different user heights. It is assumed that the stand will sit on a desk and that desktop heights are standardized. The link between the stand and the main unit must provide for a limited degree of tilt out of the vertical to suit user preference and be easily locked at that angle. The amount of tilt needed -0 + 15E from the vertical. The main unit can directly wall mount without the need of the stand assembly as an option.

The main unit case provides the housing for all the other elements in the videophone 15 design including all those shown in figure 5 and all the internal electronics. The case provides for either left-hand or right-hand mounting of the handset. Right-handed people tend to pick up the handset with the left hand (because they will drive the touch screen 74 and write with the right) and left handed people the reverse. Though the left hand location will be the normal one, it must be possible to position the handset on the right. A Speaker jack is provided on the case to allow the speakers 64 to be mounted remote from the videophone 15. Inputs are provided to handle the speaker outputs from the associated PC 68, so that videophone 15 can control the PC 68 and videophone 15 audio. Implementation of a wireless connection to speakers 64 (via Bluetooth, or SONY standards) can be used.

A handset is provided with the unit and should connect using a standard RJ9 coiled cable and connector jack. When parked the handset should be easy to pick-up and yet be unobtrusive. A handset option provides an on handset standard keypad. A wireless handset to improve mobility of the terminal user can be used.

A jack is provided for the connection of a stereo headset + microphone. Use of headsets for normal phone conversations is increasing. The user shall be able to choose to use a headset + boom mounted microphone, or a headset only, employing the microphone array as the input device. There is an option for a wireless headset to improve mobility of the terminal user.

An IR port is provided to interface to PDA's and other IR devices, in a position on the main case to allow easy access. For the moment IR interfaces on phones and PDA's are the most common and therefore for the same reasons as a bluetooth interface is required so too is an IR interface.

An array microphone is embedded in the casing. The array must not generate extraneous noise as a consequence of the normal operation of the terminal. Specifically, it should not be possible to detect user action on the touch-panel. The array microphone allows a user to talk at normal conversational levels within an arc (say 6 feet) round the front of the units and 110E in the horizontal plane and in the presence of predefined dbs of background noise. The unit must provide unambiguous indication that the microphone is active/not active, i.e. the equivalent of 'on-hook' or 'off-hook'. A videophone 15 user will want reassurance that he is not being listened into without his knowledge. This is the audio equivalent of the mechanical camera shutter.

The main videophone 15 unit may have a smart card reader option to provide secure access to the terminal for personal features. Access to videophone 15 will need an array of access control features, from a simple password logon on screen, to security fob's. A smart card reader provides one of these access methods.

There is clearly an advantage if the tilt and pan is controllable from the screen, and preferably, if Pan and Tilt are electronic only and need no mechanical mechanisms. The camera mount should be mounted as close to the top of the main screen as possible to improve eye contact.

The camera should be a digital camera 47 capable of generating 480p outputs. The camera output feeds an MPEG-2 encoder 36. It should be possible to dynamically configure the camera so that the camera output is optimized for feeding the encoder 36 at the chosen encoder 36 output data-rate. Faces form the majority of input the camera will receive, and therefore the accurate capture under a wide range of lighting conditions of skin tone is an essential characteristic.

The camera should be operated in a wide range of lighting conditions down to a value of 3 lux. The camera should provide automatic white balance. White balance changes must be slow, so that transients on the captured image do not cause undue picture perturbation. Only changes that last over 5 seconds should change the white balance. The camera should be in focus from 18 inches inches to 10 feet, i.e. have a large depth of field and desirably be in focus to 20 feet. Both the user and the information if any on his white board both need to be in focus. Auto-focus, where the camera continually hunts for the best focus as the user moves, produces a disturbing image at the receiver end and must be avoided.

The camera should allow a limited zoom capability, from the setting where one user is directly in front of the camera, to another setting where a few users are simultaneously on one videophone 15. As an alternative, different lenses may be provided. This can be specified in terms of lens field of view, from say a 30E field to view to a 75E field of view.

The camera should be able to input a larger picture than needed for transmission, for example a 1280 x 960 image. This would allow for limited zoom and horizontal and vertical pan electronically, removing the need for electro-mechanical controls associated with the camera. The camera should be physically small, so that an 'on-screen' mounting is not eliminated simply by the size of the camera.

A medium resolution long life touch panel forms the primary method of communicating with the videophone 15 and forms the front of the main display 54. The panel will get a lot of finger contact and therefore must withstand frequent cleaning to remove smears and other finger prints that would otherwise affect the display 54 quality. It should be easy to calibrate the touch panel, i.e. ensure that the alignment between the area touched on the touch panel and the display 54 underneath will result in meeting the 'false touch' requirement.

The touch screen 74 surface must minimize surface reflections so that the display 54 is clear even when facing a window. The requirement is that 'false touches' are rare events. The resolution requirement on the touch panel is therefore heavily dependent on the smallest display 54 area touch is trying to distinguish. The resolution and the parallax error combined should be such that the chance of a 'false touch' due to these factors by the average trained user is less than 5%. (One false touch in 20 selections). It is desirable that this false touch ratio is less than 2%, i.e. one false touch in 50 selections.

Where appropriate, audible and or visible feedback of a successful touch must be given to the user. These tones may vary depending on what is on the touch screen 74 display 54 at the time. For example when using a keyboard, keyboard like sounds are appropriate, when using a dial-pad different sounds are likely to be relevant and so on. Audible feedback may not be needed in all circumstances, though usually some audible or visible indication of a successful touch is helpful to the user. It should be possible for the user to be able to turn tones on and off and set the tones, tone duration and volume level associated with the touch on some settings screen. Default values should be provided. The touch screen 74 can also be used with a stylus as well as the finger.

The display 54 panel should be at least 17" diagonal flat panel (or better) full color display 54 technology, with a 16 x 9 aspect ratio preferred but a 16 x 10 aspect ratio being acceptable.

The screen resolution should be at least 1280 x 768.
The viewable angle should be at least 6E off axis in both horizontal and vertical planes. The screen contrast ratio should be better than 300:1 typical. The color resolution should be at least 6 bits per color, i.e. able to display 262K colors 6 bits per color is acceptable for the prototype units. 8 bits per color is preferred, other things being equal, for the production units. The display 54 panel should have a high enough brightness to be viewed comfortably even in a well lit or naturally lit room. The brightness should be at least 300cd/m². The display 54 and the decode electronics should be able to display 720P high resolution images from appropriate network 40 sources of such images.

The back light shall have a minimum life to 50% of minimum brightness of at least 25,000 hours. If the back-light is turned off due to inactivity on the videophone 15 terminal, then it should automatically turn on if there is an incoming call and when the user touches anywhere on the touchscreen. The inactivity period after which the touchscreen is turned off should be settable by the user, up to "do not turn off".

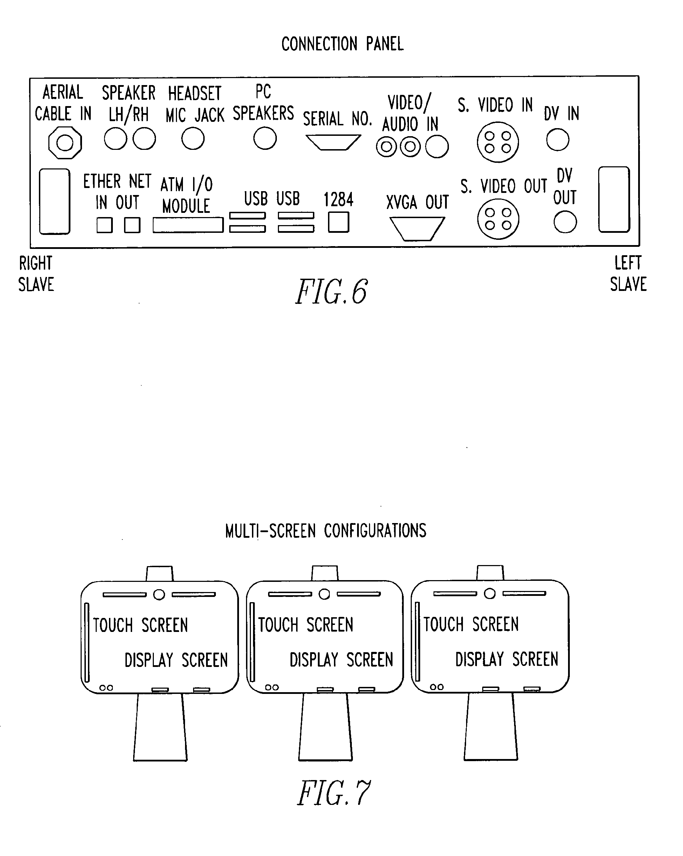

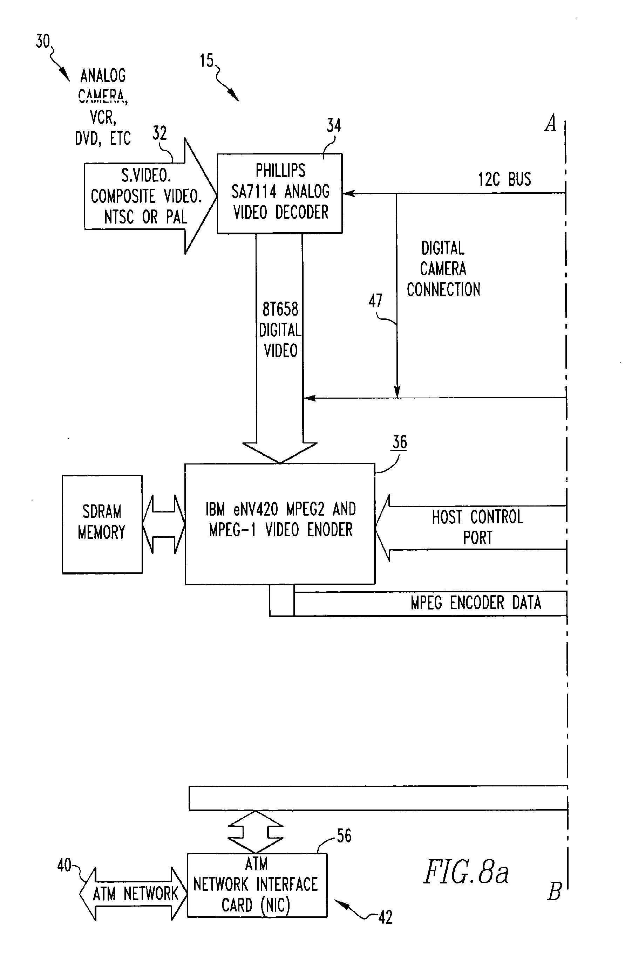

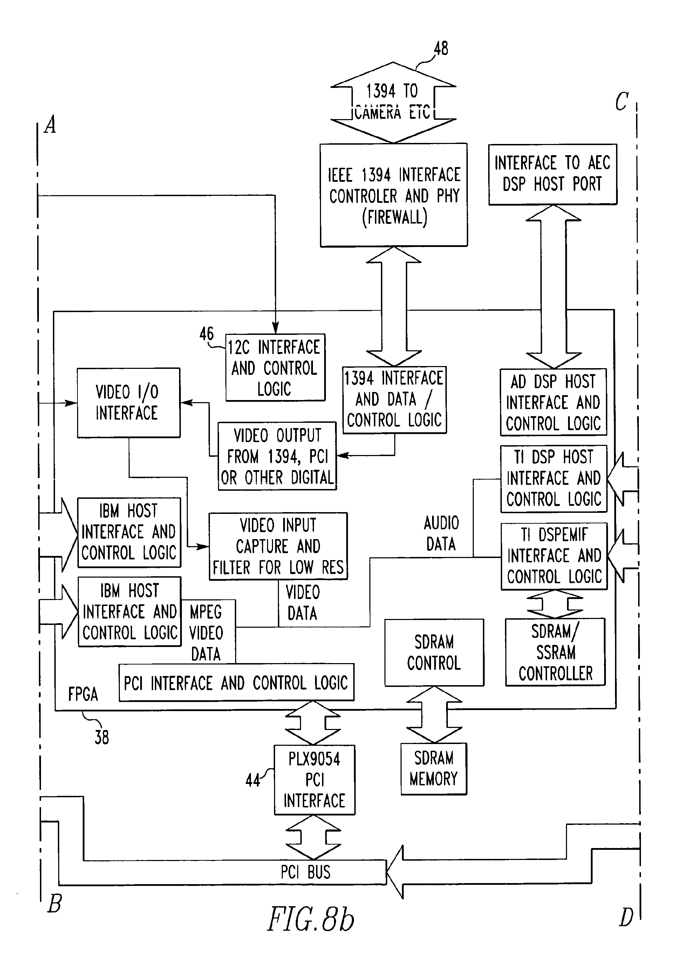

The connections required in the connection area of the videophone 15 are as shown in figure 6. Each connector requirement will be briefly described in paragraphs below.

Two RJ 45 10/100 Ethernet connectors are for connection to the network 40 and from the associated PC 68.

An optional plug in ATM personality module shall be provided that enables the videophone 15 to easily support 155 Mbits/sec interfaces for both Optical and copper interfaces.

A USB port shall be provided to allow various optional peripherals to be easily connected, for example a keyboard, a mouse, a low cost camera, etc.

A 1394 (Firewire) interface should be provided to permit connection to external (firewire) cameras or other video sources. The interface should permit full inband camera control over the firewire interface. Where necessary external converters should be used to convert from say S-Video to the firewire input. It should be possible to use this source in place of the main camera source in the videophone 15 output to the conference. It should also be possible to specify normal or "CNN" mode i.e. clippable or not clippable on this video source. An XVGA video output should be provided to enable the videophone 15 to drive external projectors with an image that reflects that displayed on the main display 54.

An audio input shall be provided for PCAudio output. To ensure integration of the PC 68 audio and videophone 15 audio, only one set of speakers 64 will be deployed. The PC 68 sound will pass through the audio channel of the videophone 15. A jack or pair of jacks shall be provided to connect to a headset and attached boom microphone. Headset only operation, using the built in microphone array must also be possible. If the headset jack is relatively inaccessible, it should be possible to leave the headset plugged in, and select via a user control whether audio is on the headset or not. Connections are provided to external left and right hand speakers 64. It is possible to use one, two or three videophone 15 units as though they were a single functional unit, as illustrated in figure 7.

In configurations of more than one videophone 15, only one unit acts as the main control panel, the other unit(s) display video and those controls directly associated with the video being displayed. Only one set of speakers 64 will be needed for any of these configurations.

A number of options shall be provided as far as microphone inputs and audio streams are concerned, from using a single common microphone input, to transmitting the audio from each microphone array to the sources of the video on that videophone 15.

A number of options shall be provided for Video inputs. The default shall be to transmit the view of the 'control panel' videophone 15. If more bandwidth is available then each user can get the Video from the screen on which the user is displayed, yielding a more natural experience. All coordination of the multiple videophone 15 terminals can be achieved over the LAN connection, i.e. not need any special inter-unit cabling.

The videophone 15 videophone provides its user with a number of main functions:
- It is the office phone
- It is the users Phone
- It is a videophone
- It is a conference phone
- It is a video conference phone
- It provides easy access to and management of contact details
- It provides access and management of voice/video mail

The units functionality falls into two categories, user functions and systems functions.

User functions are any functions to which the user will have access.

System 10 functions are those required by I.T. to set up monitor and maintain the videophone 15 terminal and which are invisible to the normal user. Indeed, an important objective of the overall design is to make sure the user is presented with a very simple interface where he can use videophone 15 with virtually no training.

The following defines the basic feature set that is the minimum set of features that must be available.

The videophone 15 videophone acts as a conventional telephone when no user is logged onto the terminal. Its functionality must not depend at all on there being an associated PC 68.

The following describes the functionality of videophone 15 as a conventional phone in an office.

The terminal is able to have a conventional extension number on the PABX serving the site.

The terminal is able to accept an incoming call from any phone, whether on the PABX, on the videophone 15 network 40 or any external phone without discrimination.

The videophone 15 is able to accept calls from other compatible SIP phones.

An incoming call will generate a ring tone as configured (see set up screen requirements below).
Specifically, the ring tone for videophone 15 calls that include Video will have an option for a distinguishing ring from audio only calls, whether from videophone 15 terminals or not.

An incoming call will generate an incoming call indication in the status area on the display 54. This display 54 must give as much Caller ID information as provided by the incoming call, or indicate that none is available.

It is possible to accept the incoming call:
a) By pressing the call accept button on the incoming call status display 54.
b) By picking up the handset - which will always accept all the offered options i.e. video and audio.

It is possible for the user to switch between handset and hands free (speaker phone) operation easily within a call. Picking up the handset within a call should automatically switch to handset mode from speaker phone mode. Replacing the handset without reselecting speaker phone mode will disconnect the call.

An on screen indication should be given of the mode, i.e. handset or hands-free.

The call status bar can display the call duration.

It is possible to adjust the volume of the incoming call by readily available controls on the main display 54. Headset and speaker volumes should be independently adjustable.

When in speaker phone mode, it is possible to return the handset to the handset stand without disconnecting the call.

A call is terminated:
$ If the user presses the clear call button on the call status display 54.
$ If the user replaces the handset when in handset mode and hands free is not selected.
$ If the remote party hangs up the call provided it is reliably indicated to the videophone 15.

HOLD - It should be possible to place a call on Hold and to take the call off Hold again. Hold status should be displayed on the status display 54, with a button to allow that held call to be picked up.

CALL WAITING - Additional incoming calls must generate an incoming call indication in the status area of the display 54. It must not generate a call tone, unless enabled in the settings menu.

It is possible to accept a new incoming call in the current operating mode, i.e. handset or hands free, from the call accept button on the status display 54.

Accepting another incoming call will automatically place current calls on HOLD.

Pressing the "take off hold" button on any call must automatically transfer any other calls to Hold.

The number of simultaneous incoming calls that can be handled is set by the availability of status display 54 space. It must not be less than two calls.

When the number of current calls exceeds the number that can be handled, any other incoming calls:
a) Get a busy tone or .
b) Are immediately forwarded to voice mail
c) Are immediately forwarded to the configured forwarding number
d) Are sent a recorded message.

As determined by the users "call forward busy" settings.

If incoming calls that are within the acceptable limit are not answered within a (configurable) interval, the calls are:
a) forwarded to voice mail
b) forwarded to the pre-configured forwarding number
c) sent a recorded message.

As determined by the user's "call forward no answer" settings.

CALL TRANSFER - It is possible for the user to easily transfer any call to any other number. The transfer function will put the call on hold and allow a new number to be dialed. Once ringing tone is heard, the user will have the option of completing the transfer. Alternatively, the user will be able to talk to the new number and then either initiate the transfer or first join all (three) parties in a conference call. If the latter, a function will be provided for the user to exit that conference call. In the event that there is no reply or just voice mail from the called terminal, the user will have the option of returning to the original call.

CALL FORWARD - It must be possible to set the phone up to automatically forward incoming calls to a pre-configured number. Call forwarding can be:
a) unconditional
b) forward on busy
c) forward on No Answer

CONFERENCE CALLS - It is possible to conference calls into an audio only conference, irrespective of the origin of the voice call. It is possible to conference at least 3 calls, i.e. a four-way conversation. It is required only to support a single conference at any one time, but still be able to accept one other incoming call as described in call waiting above. It is acceptable that the prototype be only able to accept one incoming call to a particular conference, i.e. an external bridge will be needed for non-videophone calls.

Options associated with the incoming call status display 54 will allow the user to add or remove a call from a conference connection.

It is possible to add calls to a conference irrespective of whether they are incoming or outgoing calls.

If remote conference user hangs up, that call leg must be cleared automatically.

Calls can be made hands free or whilst using the handset. Picking up the handset should bring up the dial pad if not in a call and connect the audio to the handset. An on-screen tone dial pad (i.e. numbers 1 through 0 plus '*' and '#') is required. In addition, there should be a pause button to insert a pause into a dialed string (for getting through PABXs unless the gateway(s) 70 can be programmed to remove this requirement) Consideration should be given to adding a + key and arranging that the + sign is automatically translated into the international access string for that location.

A key to correct entry errors (eg [BACK] key and a clear key to clear the entry are also required. A short press of the [BACK] key should remove the last entered number, a longer press continue to remove numbers, a press over should clear the number register.

The number display 54 should be automatically formatted to the local number format. [This may require a user setting to select country of operation as each country has a different style or if an international code is entered that code should be used as the basis of formatting the remaining part of the number.]

When connected to services that make use of the tone number pad to select features, the correct tones must be generated in the direction of that service, when the on screen key pad or the handset key pad is used. The dial-pad must be able to provide this function irrespective of how the call is initiated.

REDIAL - It is possible to redial the last dialed number through a single touch on an appropriately identified function.

AUTO REDIAL - It is possible to trigger an auto-redial mechanism, for example by holding the [REDIAL] button. Auto redial will automatically repeat the call if the previous attempts return a busy signal a number of tries.

CAMP ON BUSY - When making a call to a device that permits its support, a "Camp on Busy" function is available. Camp on Busy calls the user back once the called party is available. A message shall be generated to say 'this service is not available' if the called number cannot support Camp on Busy.

There can be an appropriate log on screen displayed when no user is logged onto the videophone 15.

A log of incoming, outgoing frequent and missed calls should be displayed on an appropriate view of the integrated dial screens. One or two touch access to 'last number re-dial' facility should always be available on the dial screens.
Further definitions of these logs are given below.

To access the full set of features available on the videophone 15 terminal, a user must log into the terminal. A login screen is provided in which the user can enter his name and password. This can be the same as his normal network 40 access name and password The videophone 15 terminal will therefore make use of the sites user authentication services. Any screens needed to enable IT personnel to configure the videophone 15 to use these authentication services must be provided. Alternative methods of identifying the user are available, for example, the use of a smart card or ID fob. There is no requirement for the user to already be logged on to a PC 68 prior to logging in to a videophone 15 terminal.

Multiple users can be logged onto a single videophone 15 and distinct incoming ring tones for each user can be provided. The incoming call indication should also identify the called parties name and well as the calling parties name. If multiple users are logged onto a single videophone 15, all the call forwarding functions are specific to the user to whom the call is addressed.

If the user is already logged in at his PC 68, the action of logging onto the videophone 15 shall create an association between the PC 68 where the User was logged on and the videophone 15 terminal provided this is confirmed from the PC 68. It is possible for a user to be logged on to multiple videophone 15 terminals simultaneously. The active videophone 15 is the one on which any call for that user is answered first.

The home page screen contains a status area that is visible on all screens (except in full screen mode). Status includes the name of the logged on user - or "no user logged on". The User's "Presence" status, Icons for video and audio transmission, Voice mail "Message" indication and the date and time.

A "message" indication is lit and flashing if there is unheard voice mail on the user voicemail system 10. Pressing the indicator brings up the Voicemail handling screen.

Touching the Date time area gives access to the Calendar functions.

The home page has a control bar area that is visible across all screens (except in full screen mode).

The control bar gives direct access to the most frequently used call control features and access to all other functions. Icons should be used on the buttons, but text may also be used to emphasize functional purpose.

The control panel also has global controls for the microphone, Camera and Speakers 64. The controls should clearly indicate their operational state, e.g. ON or OFF and where possible Icons should be used.

A self-image is available that indicates both the picture being taken by camera and that portion that is visible to the remote end of the active call. It is possible to turn self-image on and off and to determine whether it is always on or only once an active call has been established.

It is possible to display the camera image in the main video area of the screen at any time, i.e. in a call, not in a call, etc. The image should be that for a single Video call and should overlay any other video present. It should be possible to request a full screen version of that video. This can be thought of as a digital mirror and allows the user to make sure he/she is happy with what the camera will/is show(ing).

It is desirable for diagnostic purposes that the user can also see the image after encoding and decoding, so that he is aware of the quality of the image that will be seen at the far end. If this mode is supported then both the camera direct and the encoded decoded image side by side. The user can capture his self image, for use as the image associated with his contact information.

The major part of the Home screen is allocated to an Integrated Dial functions. There are four main sub-functions, a speed dial display 54, a directories access display 54, a dial-pad and access to call logs. The dial-pad and access to call logs are to occupy the minimum screen area compatible with ease of use, maximizing the area available to the Speed Dial/Contacts pages. The speed dial area is detailed first, any common requirements across all the main sub-functions are only detailed under speed dial and are implied for the other three functions. The function of the Dial area is to select a user to whom a call is to be made.

The speed dial area is as large as possible, consistent with the other requirements for the dial screen. >20 speed dial locations is adequate. Each location should be large enough to make the identification of the persons detailed stored at that location very easily readable at the normal operational distance from the screen say 3 feet.

The user's information stored in a speed dial location includes the persons name, 'presence status' if known, the number that will be called if that speed dial is selected and an icon to indicate whether the user supports video calls. The detailed information also stores what kind of video, e.g. videophone 15, compatible MPEG2, H261 etc.

The area provides a clear area to be touched to initiate a call. A thumbnail view of the person is included if available. A method of handling long names (i.e. names that do not fit in the space allocated on the Speed Dial button) is provided.

Conventional telephone numbers in standard international format i.e. "+ country code area code number" are automatically translated to the external access plus the international access codes needed to make a call to this number.

The full contact details associated with a person on the Speed dial page is available. The contact details provide all the numbers at which the user can be reached and a means of selecting one of the numbers as the default number that is used on the Speed Dial page. It is possible to select and dial an alternative number for that user via this link to the contacts page.

The User information includes most recent call history for that person, for example the last 10 calls either incoming missed or outgoing. Just providing the 'last call' information would be an acceptable minimum functionality.

It is possible to edit the contact details associated with the Speed dial entry and or create a new contact entry for the Speed dial page. It is possible to copy an entry from the contacts, directories or call log screens onto the Speed Dial page. It is possible copy an entry from the Speed Dial page to the contacts or Directory screens. It is possible to delete a Speed dial entry, or to move that entry to another contacts page. (i.e. copy and then delete original).

It is possible to control the placing of users on the Speed Dial page. It should also be possible in some manner (color coding) to distinguish between different classes of Speed Dial users, i.e. business, family, colleagues, vendors, customers. The speed dial page may well contain names from multiple other categories in the contacts information. Some form of automatic organization is available, for example, last name first name company or by class followed by last name first name company etc.

It is possible to define a group of users as a single speed dial entry. It is acceptable if the group size is limited to the size of the maximum conference call. It is possible to select the Directories view from the Speed Dial page. The Directories view will occupy the same screen area as the Speed Dial page. It is possible select from the range of on-line directories to which videophone 15 has access. The default will be the Outlook and or Lotus Notes directory that contains the users main contact details. The name of the selected directory should be displayed.

The categories established by the user in his Outlook or Notes contacts list is available as selections. If the number of categories do not fit in the display 54 area, buttons are provided to scroll either up or down the list. The list should be organized alphabetically.

The Speed Dial category is the category used to populate the Speed Dial page. There is some indication on when the Speed dial page is full and it no longer possible to add further names to this contacts category, unless they replace an existing entry. The ability to order Speed dial entries in order of most recent call, i.e. the least used Speed Dial entry would be at the bottom. This would be used to see which entry was best candidate for deletion to allow a more used number to be entered.

It is possible to easily find and select an entry from the selected category, with the minimum of user input. The entry selection mechanisms must work for relatively short lists and for very long lists (10,000's of names). The mechanisms must include the ability to enter a text string on which to search. It is possible to select the sort order for the presented data, by last name, first name or organization. There is a method of correcting entry errors, and quickly re-starting the whole search.

It is desirable if each order of the search keys was significant and could be changed by the user. In other words for example pressing and holding the left most search key enables the user to select to search on Last Name, First Name or Company (or an extended list of attributes. This is useful for example for finding someone in a particular department, or at a particular location - "who is in Korea"). The second key then qualifies the first key search and so on. Thus, the keys are set Company, Last Name First Name; say Marconi, then do an alphabetic user search within last names at Marconi. Clearly when each sort category is selected there is some implied sub-ordering of entries with the same value in that category field. So for last name selected, the implied sub-order is first name then company, for company the implied sort order is last name first name, and for first name, say last name company.

The call log screen displays the most recent entries of three categories of calls, outgoing, incoming, and missed calls, with a clear indication of which category is selected. In addition there should be a "frequent" category, that lists numbers by the frequency of use, over the last (<200) calls of any type. There should be access to the Dial Pad from the call log screen. The analysis of the value of providing a far greater degree of handling call log data is deferred.

At minimum, when the "message" is touched a connection is made to the users voice mail system 10, the voice mail for this user is entered and the dial-pad is displayed to control the voice mail using the conventional phone key presses. The larger part of the "voice-mail" screen should bring up buttons to access each feature of the mail system 10, for example Next Message, Previous Message, Play Message, Forward Message, Reply to Message, call sender, etc. with all the equivalents of key presses within each function e.g. start recording stop recording review recording delete recording etc. All the functions need to be on buttons, converted to the respective DMF tones.

It is desirable that the "Forward to" number or any voice mail command that requires a list of users numbers to be entered can be selected from the Speed Dial or Directory views and that selection automatically inserts just the appropriate part of the users number. This could be particularly useful in forwarding a voice message to a group. It is possible for the user to set the time and date on the videophone 15. It is desirable that the time and date can be set automatically by appropriate network 40 services.

It is desirable that Calendar functionality is available that is integrated with the users Outlook/Palm/Notes Schedule/Calendar application. The minimum requirement would be simply to view the appointments at any date, by day, week or month (as per Outlook or Palm screens) with changes and new entries only possible via the Outlook or Palm database.

It is likely that quite a few of the users will not maintain their own calendars and indeed may NOT have PCs 68 on their desk, but do need to view the information. Touching the User Status area of the status part of the screen allows a user to set his status. The user will have a range of Status options to choose from, including:
i) Available
ii) Busy - on a call where another call will not be accepted
iii) Do not disturb - not on a call but not interruptable
iv) Back in five minutes
v) Out of the office
vi) On Holiday

A single call instance on the videophone 15 terminal supports from one incoming stream to the maximum number of streams in a conference. For Video conferencing, the Terminal will support at least four connections to other parties as part of a single conference call. It is possible to accept at least two independent audio only calls, even when a maximum size video conference call is present, so that an audio call can be consultation hold transferred. The videophone 15 is able to support at least three simultaneous "call instances", i.e. up to three independent calls. Only one call can be active, i.e. the call controls can be applied only to one call at a time. More than one call can be accepted, i.e. users audio and video are being transmitted on each accepted call, whether active or not. Calls in progress may also be placed on HOLD, when the users audio and video is not transmitted to the user on HOLD and the audio and video from that user is also suppressed.

Incoming calls status is shown in Control display 54 area. Calls themselves and in-call controls are shown in the main section of the display 54.

Call states are:
i) Incoming call
ii) Accepted and active - the user's audio (and video if a video call) are, subject to the various mute controls, connected to this call.
   Call controls apply to this call.
iii) Accepted and not active - as above, but the call controls do not apply to this call.
iv) Accepted and on hold - users audio (and video if a video call) are not being transmitted to this call.
v) Accepted and being transferred

Call states are indicated on each call. Only one accepted call can be active. An accepted call is made active by touching in the call display 54 area associated with that call, or the call status in the control panel. Any previous active call is set not active. A second touch will turn off the active state. An incoming call indication indicates if the call is offering a video connection. No indication implies an audio only call. The incoming call indication will show the name(s) of the parties associated with that incoming call. This shows immediately if the user is being called one on one, or being invited to join a conference.

The user has the following options to handle an incoming call:
i) Accept the call as a voice only call
ii) Accept the call as a video call (voice is implied)
iii) Send to voice mail

A setting is available to set the videophone 15 terminal to auto-answers incoming calls, up to the maximum number of supported calls. Auto-answer creates an audio and video connection if one is offered. Once a call is in progress, the Users status should be automatically changed to "In a call". The Users status will revert back to its previous state (typically "Available") once no calls are active.

The user is able to configure if call user data is also distributed. If the user already has one or more calls accepted and if all calls are on HOLD or not active, this call will create a new call instance if accepted. All the accepted but not active calls will continue to see and hear the user as he deals with this new call. If one of the accepted calls is accepted and active, the new call will be joined to that call and all parties to the call will be conferenced to the new caller, if the call is accepted.

If the user does not pick up after (>10) seconds, the call will automatically be forwarded as determined by the "Forward on No Answer" settings. As above the forwarding is specific to the user to whom the call is addressed. If the users status is marked "Do not disturb" or "Busy" or the "Busy" state has been set by there being the maximum number of calls being handled, the call is forwarded "immediately" as determined by the "Forward on Busy" and "Forward on Do not disturb" settings, as modified by the "show forwarded calls" setting if implemented.

Depending on the "show forwarded calls" settings, the user can chose to see the incoming call indication for (>5 seconds) before it is forwarded. (This means the user needs to take no action unless he wishes to pick up the call, rather than the positive action required on a call above.) This does not function if the Busy state is due to the videophone 15 already handling the maximum number of calls.

The ability to generate a (very short) text message that is sent with the call is a useful way of conveying more information about the importance of the call and how long it will take. The requirements associated with generating and adding a message to an outgoing call are dealt with below. If present, the incoming call text message should be displayed associated with the incoming call. The display 54 copes with the display of text messages on multiple incoming calls simultaneously. The text message is also stored in the incoming or missed call log.

Call parameter negotiation is limited to that needed to establish the call within the network 40 policy parameters and the current network 40 usage. Settings are provided to allow the user to specify his preference for calls to other videophone 15 terminals, for example always offer Video, never offer video, ask each call if I want to offer video or not.

Camp on Available is supported for calls to other videophone 15 users. This will initiate a call to the user once his status changes to "available". If the user to be called is a group, the calls will only be initiated once all members of the group are 'Available'.

A conference call is when one location in the Speed Dial or Directories list represents a group of people, each of which are to be participants in a call. The suggested process of implementing this feature is to make each call in turn and once active request confirmation that the call should be added to the conference. This gives an escape route if the call goes through to voice mail. Once the actions on the first caller are completed, i.e. in the call or rejected the next number is processed.

It is possible to create an outgoing call that is half-duplex, in other words that requests audio and or video from the called party, but does not transmit either on this type of call. This is pull mode. Equally, it is possible to create a push mode, where the outgoing call does send audio and or video, but does not require any audio or video back. This mode may be used to selectively broadcast content to unattended terminals, or terminals with users playing only a passive role in the conference.

The overall volume of the speakers 64, the handset and the headset are independently adjusting. The speaker can be turned ON and OFF. Turning the speaker off will also turn off the microphone. Status indicators show the status of the Speaker and Microphone.

The microphone can be turned off and turned back on. Status indicators show the status of the microphone mute.

The camera can be turned off and turned back on. Status indicators show the status of the camera mute.

In call controls work only on the active call. An accepted call is made active if it is not active, either by touching the call in progress status indicator in the control panel, or anywhere in the call display 54 area except for the specific in-call control function areas. Any other currently active call is turned in-active. The active call can be turned in-active by a subsequent press in the same area. A control is provided that hangs up the active call. In a conference call it clears all elements of the call instance.

A call must be accepted and active for the Conference control to function. Touching the Conference control will join the currently active call instance to the next call made active. Conference control will indicate it is active either until it is pressed again, making it inactive, or another call instance is made active. After all the calls in the now active call are joined to the Conferenced call instance the call becomes a single conferenced call and the Conference control active indication goes out. Just to re-state, conference selects the call to which other calls will be joined and then selects the call to join to that call.

The method of terminating one party to a conference call is for that party to hang-up. For a variety of reasons, the user may wish to have independent control on each part of a call instance. This can be achieved by a de-conference capability. For example, by touching the call instance for longer than three seconds, a sub-menu appears that allows the individual members of the call instance be identified and selected for deconferencing. This call is then removed from the conference and established as a separate call instance, where all the normal controls apply, specifically it can be cleared.

The transfer function transfers the active call. When the transfer control is touched, the integrated dialing screen is displayed and the active call is placed on hold, but indicating that it is engaged in an in-call operation. The Transfer control indicates it is active, until it is pressed a second time, canceling the Transfer, or until the user selects and presses dial on the number to which he wishes the call to be transferred.

Once the outgoing call has been initiated, the Transfer control indicates a change of state, so that touching the control cause a 'blind' transfer and the call instance is removed from the screen. Alternatively, the user can wait until the called number answers, at which point a new call instance is created, allowing the user to talk to the called party, and the Transfer function changes state again, to indicate that pressing it again will complete the transfer and terminate both calls. Otherwise, the requirement is to go back to talking to the caller being transferred and re-start the transfer process or terminate the call. Transfer is the main mechanism whereby an 'admin' sets up a call and then transfer it to the 'boss'. In this case, it is essential that it is not possible for the admin to continue to 'listen into' the transferred call. This will be especially true in a secure environment.

The active call can be placed on HOLD by touching the HOLD control. In HOLD, the outgoing video and audio streams are suspended and an indication given to the remote end it is on HOLD The incoming audio and video streams are no longer displayed. The HOLD state is indicated on the call status display 54 on the control bar. The Hold control indicates hold is active if any call is on hold. Pressing HOLD again when the active call is in HOLD removes the HOLD and returns the call to the displayed state.

There is a control on the main control panel that brings up the home screen and gives access to all the other non-call functions. There is an indication that Main has been selected. Pressing Main a second time re-establishes the current call displays and de-selects Main. Separate controls are provided for each accepted and displayed party within a call, and for each call displayed. Adjusting the volume of the audio from each particular user is required. It is possible to individually mute audio and or video of each user displayed on the screen. There is a status indicator to indicate if audio or video mute is ON.

If more than one call instance can be displayed at any one time, for example, a conference call with two others, plus a new call to one other user, then it is possible to mute audio and or video for a complete call instance, for example mute the two party conference for audio, whilst speaking to the second call.

Requesting video on an audio only connection that could support video is provided. Accepting or rejecting a video request is provided. A video connection is established if the connection is agreed. A settings page item enables the user to always accept or always reject video requests.

It is possible to display the bearer channel parameters for each connection, i.e. the incoming and outgoing encoding rates for video if present and audio. In a call, controls work only on the active call. An accepted call is made active if it is not active.

It is possible to enable a 'bearer channel quality monitor' for any user. This monitor, a bit like a signal strength meter on a mobile, would show, for example, 100% Green bar when there were no errors or lost packets on the audio and video channels, a yellow bar once loss rate or the latency exceeds a predetermined rate and a red bar once it exceeds a higher rate. The time integral should be short, say 50 milliseconds as errors in this timeframe will affect the users video. So, for example, if the receiver sees video artifacts, but at the same time sees the monitor bar move yellow or red, he knows it is network 40 congestion induced.

Requesting a change in video encoding parameters, i.e. increase or decrease encoding rate, within the call is provided. Accepting or rejecting this request and a method of changing the outgoing video rate is provided. The videophone 15 generates a single outgoing encoding rate to all participants. It is possible for it to accept different incoming rates on all of the incoming streams.

A request for a side-bar with the ability to accept or reject the request is provided. If accepted, sidebar turns off the audio stream from both participants to everyone else, so they can have a private conversation, whilst continuing to hear all the discussion and continue to see and be seen by all the participants. The ability to send short messages both ways with the video and sidebar requests is provided.

Irrespective of whether the call is an incoming or outgoing call, the screen transition to the video view should be smooth. The audio may anticipate the video. The video should not be displayed until this transition can be made. (i.e. there should be no jumpy pictures, half formed frames etc in the transition to the video.) The transition to the user display 54 video screen should only start after the call is "in progress" and not at the time of initiating the call. The display of the video from the user should make maximum use of the area of the display 54 allocated to user display 54. An in display 54 control is able to convert this single call instance single user display 54 to a full screen display 54. Touching anywhere inside the "full screen" display 54 will revert to the standard display 54. In addition to the in call controls already mentioned, the users name should be displayed. The display 54 and the call instance on the control panel must indicate if the call is active or not, i.e. if the in call general controls will operate or not. With one call instance up, active inactive is by pressing on the call instance or anywhere on the main display 54 apart from the in call specific control areas.

The transition from a one call instance two party call should be smooth and should be initiated once the second call is "in progress". The display 54 should make maximum use of the display 54 area allocated to user display 54. If necessary, the videos can be clipped at each edge, rather than scaled, to fit the available area. There is no requirement for a full screen display 54 for two or more up. In addition to the in call controls already mentioned, the user name should be displayed for each party. There must be an indication that both parties are part of a single call instance. The display 54 and the call instance on the control panel must indicate if the call is active or not. The incoming video can be progressively clipped to fit the available display 54 area as more parties are added to the video call.

In two call instances both single party calls, there are two separate calls to single users, both of which are displayed. The on-screen display 54 and the call control indication clearly indicate these are two separate and independent calls and also indicate which if any is active. If either call is placed on HOLD, that call is no longer displayed and the display 54 reverts to a single call instance single call display 54.

The user area should be capable of displaying any of the following combinations in addition to those described above.

Four call instances each single party calls;

Three call instances where one call can be two party and the others are single party calls;

Two call instances where one can be up to three party or two can be two party call.

The requirements of a "CNN" style display 54 are those of the single call instance single call above, including the ability to have a full screen display 54. It is also possible to display "CNN" style call in half the screen and use the other half for one or two user display areas, the latter as two independent call instances or a single two party call instance.

The ability to provide various levels of encryption for the voice and data streams is provided. Access to diagnostic, test, measurement and management facilities shall make use of SMF (simple management framework), in other words access will be possible to all facilities in three ways, via SNMP, via the web and via a craft interface. The videophone 15 terminal must be remotely manageable, requiring no on site IT expertise for every day operation, or for software upgrades that do bug fixes. Fault diagnosis is also possible remotely and be able to determine if the problem is with the unit hardware, the units configuration, the units software, the network 40 or the network 40 services. Management can assume IP connectivity, but must assume a relatively low bandwidth connection to the videophone 15.

Under normal operation, the videophone 15 should perform a shortened version of hardware system 10 test as it powers up. If this fails, the videophone 15 should display a boot failure message on the main screen. The terminal can be forced into an extended hardware diagnostic mode. This could be by attaching a keyboard to a USP port, or by pressing in the top right hand corner of the touch screen 74 as the unit powers up. This mode would give access to the underlying operating system 10 and more powerful diagnostics, to determine if the there is a hardware failure or not.

A series of simple tests can be included that the user can run in the event that the videophone 15 passes the boot-up test but is not providing the correct functionality for the user. The terminal provides a technical interface, in association with a local keyboard (and mouse) to assist in diagnosing unit or system 10 problems. This would give access to the various diagnostics for audio and video, etc.

It is possible to download safely new versions of the videophone 15 terminal software under remote control. By safely, it means being able to revert to the previous version if faults occur in the downloaded version, without local intervention (i.e. someone having to install a CD). It is possible to read the software version number of the software on a particular videophone 15 terminal, and the units hardware serial number, assembly revision number and the serial number and assembly revision number of key sub-assemblies via the management interfaces. In the event of a system 10 crash, the videophone 15 should store or have stored information to assist in the diagnosis of the cause of that crash. This information must be retrievable on line from a remote site for analysis once the videophone 15 has re-booted.

The videophone 15 keeps a running log of all actions, events and status changes since power up, within the limits of the storage that can be allocated to this feature. It should enable at least one month's worth of activity to be stored. This data may need to be in a number of categories, for example a secure category that contains the users data, such as the numbers he called would only be releasable by the user. Generic data, such as number of calls, call state (i.e. number of call instances and endpoints per instance, encoder 36 and decoder 34 characteristics, bearer channel error reports and so on are not so sensitive information. It may be useful to be able to record every key press as a way of helping diagnose a system 10 level issue and re-create the chain of events.

It is possible for the videophone 15 to copy the exchanges at the control plane level at both the IP level and the SIP level, to a remote diagnostic terminal (the equivalent of having a line monitor remotely connected to the videophone 15 terminal). Terminal management will monitor a number of parameters, for example, network 40 quality. It must be possible to set thresholds and generate alarms when those thresholds are exceeded. Both the ATM interface and the Ethernet interface have standard measurements (rmon like, for example) that should be available for the videophone 15. The videophone 15 should be able to send those alarms to one or more Network Management Systems.

### Audio Mixer

In regard to the audio mixer, a first node 80 which can produce an audio stream and a video stream, and which is part of an ATM network having quality of service capability, wishes to form a point to point call with a second node 82. The second node 82 only has audio capability and is, for instance, a PSTN phone. The second node 82 is not a part of the ATM network.

The first node 80 begins the formation of the call to the second node 82 by sending signaling information to an SIP server, also part of the ATM network, which identifies to the server that the second node 82 is the destination of the call that the first node 80 is initiating. The server, which already has address information concerning the second node 82, adds the address information to the signaling information received from the first node 80, and transmits the signaling information with the address information of the second node 82 to an audio mixer 20 that is also part of the ATM network.

When the mixer 20 receives the signaling information that has originated from the first node 80, it determines from this information that it is the second node 82 with which the first node 80 wishes to form a connection. The mixer 20 then sends an invitation to the second node 82 through which it is somehow in communication, such as by a T1 line or ethernet but not bv way of the ATM network, to identify itself in regard to its features and the form that the data needs to be provided to it so it can understand the data. In response, the second node 82 identifies to the mixer 20 the specific form the data needs to be in so that the second node 82 can understand the data, and also indicates to the mixer 20 it is OK to send data to it so the connection can be formed.

The mixer 20 then sends a signal to the first node 80 that it is ready to form the connection. To the first node 80, the mixer 20, which is part of the ATM network, represents the second node 82 and gives the impression to the first node 80 that the second node 82 is part of the ATM network and is similar to the first node 80. To the second node 82, the mixer 20, which is also part of the network or connectivity that the second node 82 belongs, represents the first node 80 and gives the impression to the second node 82 that the first node 80 is part of the same network or connectivity to which the second node 82 belongs and is similar to the second node 82.

The first node 80 then initiates streaming of the data, which includes audio data, and unicast packets of the data to the mixer 20, as is well known in the art. When the mixer 20 receives the packets, it buffers the data in the packets, as is well known in the art, effectively terminating the connection in regard to the packets from the first node 80 that are destined for the second node 82. The mixer 20, having been informed earlier through the invitation that was sent to the second node 82, of the form the data needs to be in so that the second node 82 can understand it, places the buffered data into the necessary format, and then subject to proper time constraints, sends the properly reformatted data effectively in a new and separate connection from the mixer 20 to the first node 80. In this way, a point to point call is formed, although it really comprises two distinct connections, and neither the first node 80 nor the second node 82 realize that two connections are utilized to create the desired point to point call between the first node 80 in the second node 82. Similarly, when data is sent from the second node 82 back to the first node 80, the process is repeated, although in reverse so that after the data from the second node 82 is received by the mixer 20, the mixer 20 reformats the data into a form that the first node 80 can understand and unicasts the data from the second node 82, that has been buffered in the mixer 20, to the first node 80. If IP instead of ATM is used, then the mixer 20 sends unicast IP packets to the first node 80, as is well known in the art.

A scenario involving conferencing, otherwise known as a point to multi point connection, will now be described using the present invention. Continuing the discussion involving a point to point connection from above, the first node 80 desires to join in the connection to form a conference, a third node 84 that is part of the ATM network and has essentially the same characteristics as the first node 80. The first node 80 sends a signaling invitation to a host node 22 that will host the conference. The host node 22 can be the first node 80 or it can be a distinct node. The first node 80 communicates with the host node 22 through the server to form a conference and join the third node 84 into the conference. The host node 22 invites and then forms a connection for signaling purposes with the mixer 20 and causes the original signaling connection between the first node 80 and the mixer 20 to be terminated. The host node 22 also invites and forms a connection with the third node 84 in response to the request from the first node 80 for the third node 84 to be joined into the connection. In each case that a node which is part of the ATM network is to be joined into the connection, signaling goes through the server and is properly routed, as is well known in the art. The host node 22 acts as a typical host node for a conferencing connection in the ATM network. The mixer 20 represents any nodes that are not part of the ATM network, but that are to be part of the overall conferencing connection.

In regard to any of the nodes on the ATM network, the mixer 20 makes any nodes that are part of the connection but not part of the ATM network appear as though they are just like the other nodes on the ATM network. Through the signaling connections, that are formed between the host and the mixer 20, and the mixer 20 and the second node 82 (as represented by the mixer 20), the required information from all the nodes of the connection is provided to each of the nodes so that they can understand and communicate with all the other nodes of the connection. In fact, the host node 22 informs all the other nodes, not only the information of the characteristics of the other nodes, but also returns the information to the nodes that they had originally provided to the host node 22 so that essentially each node gets its own information back. Once this information is distributed, the streaming information is carried out as would normally be the case in any typical conferencing situation. In an ATM network scenario, the first node 80 and the third node 84 would ATM multicast using PMP tree the information in packets to each other and to the mixer 20. In an IP environment, the first node 80 and the third node 84 would IP multicast packets to all nodes (the mixer 20 being a node for this purpose) in the network, and only those nodes which are part of the connection would understand and utilize the specific packet information that was part of the connection.

The mixer 20 receives the packets from the first node 80 and the third node 84 and buffers them, as described above. The packets from the different nodes that are received by the mixer 20 are reformatted as they are received and mixed or added together according to standard algorithms well known to one skilled in the art. At a predetermined time, as is well known in the art, the reformatted data by the mixer 20 is then transmitted to the second node 82. In the same way, but only in reverse, the data from the second node 82 is received by the mixer 20 and buffered. It is then multicast out in a reformatted form to the first node 80 and the third node 84.

When a fourth node, that only has audio capability, like the second node 82, and which is not part of the ATM network, is joined into the conference, the host node 22 forms a second signaling connection with the mixer 20. The mixer 20 in turn forms a distinct connection with the fourth node separate from the connection the mixer 20 has formed with the second node 82. The mixer 20 maintains a list of sessions that it is supporting. In the session involving the subject conference, it identifies two cross connects through the mixer 20. The first cross connect is through the signaling connection from the host node 22 to the second node 82, and the second cross connect is from the host node 22 to the fourth node. In this way, the first and third nodes 80, 84, as well as the host node 22, believes that there are two separate nodes, representing the second node 82 and the fourth node, to which they are communicating. In fact, the mixer 20 represents both the second node 82 and the fourth node and separately multicasts data from each of them to maintain this illusion, as well as the illusion the second node 82 and the fourth node are like the first node 80 and the third node 84, to the first node 80 and the third node 84.

The ViPr system is a highly advanced videoconferencing system providing 'Virtual Presence' conferencing quality that far exceeds the capabilities of any legacy videoconferencing systems on the market today. The ViPr system relies on point-to-multipoint SVCs (PMP-SVC) and IP multicast to establish point-to-multipoint audio/video media streams among conference participants. While users participating in a ViPr conference enjoy an unprecedented audio and video quality conference, there is a need to enable other non-ViPr users to join a ViPr conference. The system 10 enables a unicast voice-only telephone call (i.e. PSTN, Mobile phones and SIP phones) to be added to a multi-party ViPr conference.

The current ViPr system provides support for telephony systems through SIP-based analog and digital telephony gateways. This functionality enables ViPr users to make/receive point-to-point calls to/from telephone users. However, they do not allow a ViPr user to add a telephone call to a ViPr conference. This is due to the unicast nature of telephone calls and the inability of the telephony gateways to convert them to PMP/multicast streams. The ViPr UAM will enhance the ViPr system's support for telephony by enabling ViPr users to add unicast telephone calls to ViPr conferences.

In order to support this functionality, the ViPr UAM adds seamless conferencing functionality between the ViPr terminals and telephone users (i.e. PSTN, Mobile phones and SIP phones) by converting an upstream unicast telephone audio stream to point-to-multipoint audio streams (i.e. PMP-SVC or IP Multicast) and mixing/converting downstream PMP/multicast ViPr audio streams to unicast telephone audio streams as well as performing downstream audio transcoding of ViPr audio from the wideband 16bit/16KHz PCM encoding to G.711 or G.722.

An additional functionality provided by the UAM is that of an Intermedia gateway that converts IP/UDP audio streams to ATM SVC audio streams and vice-versa. This functionality enables the interoperability between ViPr systems deployed in ATM environments and SIP-based Voice-over-IP (VoIP) telephony gateways on Ethernet networks.

The UAM allows one or more ViPr phones to work with one or more phone gateways.

The UAM will support ViPr Conference calls with unicast audio devices present in following configurations:
- ≅: Type 1: Support one conference call with only one audio unicast device present as a participant.
- ≅: Type 2: Support multiple conference calls. Each conference call could potentially have multiple audio Unicast devices present as a participant.
- ≅: Type 3: Support multiple conference calls with each conference call having exactly one audio unicast device present as a participant.

Preferably, 20 participants (unicast devices plus ViPr phones) can be serviced by a single Unicast Manager application.

The unicast device will be used in the configuration shown in figure 1.

As shown in figure 1, all calls to and from a unicast device to a ViPr are always sent to the UAM. The UAM implements a B2B SIP UA to connect the unicast device to a ViPr.
Example: User A at POTS1 calls user B at ViPr V1. The following sequence of events takes place:
1. UD1 (Mediatrics or whatever unicast device) receives the request from **User_A** to connect to **User_B.**
2. UD1 sends an INVITE to UAM. The To field or the Display Name in the INVITE identifies the call is for **User**_**B.**
3. UAM receives INVITE as incoming call C1.
4. UAM extracts the sip address of User_B from the INVITE on C1 and initiates a call C2 to this user by sending out an INVITE to V1.
5. UAM also cross connects C1 to C2.
6. V1 sees an incoming INVITE from UAM, which is identified by the SDP as a ViPr class device. Thus software on V1 knows that the peer software is capable of supporting all the functionality expected of a ViPr device including Replaces/Refers etc.
7. Say **User_B** at V1 replies back to INVITE with OK.
8. The UAM will mark the connection C2 as up. It then sends OK on C1.

### Media Streams in this example

The media streams between V1 and UD1 are sent in either of following ways:
1. The media is sent directly from V1 to UD1. This can be done by UAM writing the right SDP. Thus while sending INVITE to V1 it puts the IP address, port of UD1 for receive. And while sending OK to UD1 it puts the IP address, port of V1 as receive address.
2. The media is relayed by UAM. In this case, UAM relays data from V1 to UD1 and vice-a-versa. It is easy to see that if UAM and ViPr communicate are connected via an ATM cloud, then an SVC between V1 and UAM could be set up. Thus, the UAM acts as an ATM to Ethernet gateway for media traffic.

Extending the example 1 further, User_A decides to join User_B at V2 into the conference. The following events happen:
1. The Sip connection between UAM and V1 is replaced by A conference call C3 with V1, V2 and UAM as participants. Thus, the B2B UA is now cross connecting a conference call (C3) with a unicast call (C1).
2. UAM always relays traffic between C3 and C4. Option 11 above. It mixes the traffic from V1 and V2 and relays it to UD1. It also multicasts traffic from UD1 to V1 and V2.

The functionality performed by the UAM can be broken into following components:
≅ SIP B2B UA Unit [SBU]. This unit performs the sip signaling required to implement the B2B SIP UA.
≅Media Cross Connect and Mixer [MCMU].

The UAM functionality will be decided across three processes: SBU, Unicast Mixer Manager and Sip stack, as shown in figure 2.

The SipServer process will implement the SIP functionality and would provide the SBU with an abstracted signaling API (Interface Ia). Interface Ia also stays unchanged.

The SBU implements the call control and glue logic for implementing the B2B UA. This unit derives from Callmanager/Vupper code base. The SBU is responsible for setting up the right mixer streams too. For this purpose, SBU interfaces with the UMM process through RPC.

UMM implements the functionality for cross-connecting media streams as well as implementing the audio mixing functionality.

The SBU implements the call control and glue logic for implementing the B2B UA. The SBU is responsible for setting up the right mixer streams too. For this purpose, SBU interfaces with the UMM process through RPC.

```
 Session
 Class MediaSession
 {
    int SelfID // Self ID
    CVString GUID // Conference Call ID
    CVList XIDList; // List of cross connects
   GUID
 }
 
 SIPB2BCrossConnect
 Class SIPB2BCrossConnect
 {
   int SelfID // Self ID
   int SessionID // Of session of which it is a
 member
   Int ViPrLegID // SiPCallLeg connected to ViPr
   Int UDLegID // Leg connected to unicast device.
 }
 
 SIPB2BCallLeg
 Class SIPB2BCrossConnect
 {
  int SelfID // Self ID - returned by
 callmanager
  int XID // ID of Cross Connect who owns
 this leg
  SipCallLeg ViPrLeg // Leg connected to ViPr
  SipCallLeg UDLeg // Leg connected to unicast device.
 }
```

The SBU unit is internally structured as follows:

As can be seen from figure 3, the design for SBU reuses and extend the SIP/Media Stream interface offered by the CallManager to implement the signaling call control logic for

### UAM.

The following text presents the flow of control when the user A initiates a call to User_B.

In the following SipServer refers to SipServer at UAM, SBU refers to SBU at UAM and UMM refers to UMM at UAM.

To clarify the example further, assume the following:
- The entire network is Ethernet network
- IP address of V1 is 172.19.64.101
- IP address of V2 I 172.19.64.101
- IP address of interface of UAM which is connected to V1/V2 cloud is 172.19.64.51, IP interface of UAM connected to UD1 cloud is 169.144.50.100
- IP address of UD1 is 169.144.50.48
- Address is represented as <IpAddress, port> tuple
- All the addresses and ports in the example are illustrative, they are not required to be fixed but are rather allocated by OS.
- In the following example, all the SIP events received by SBU (at UAM) are actually received by SipServer and than passed to SBU. However, the Sipserver receiving the event and passing it to SBU is not shown for brevity.

**Flow of control for a P2P call between UD1 and V1**

| **#** | **Loc** | **Action** |
|---|---|---|
| 1 | UD1 | INVITE sent from UD1 to SD1. This invite contains the Address < 169.144.50.48, 50000 > for receiving stream from UD1 for this call. |
| 2 | SBU | SBU gets an incoming call C1. SBU examines the call and sees it is from a Unicast device. It then performs the following actions. |
| | | |
| | | -Extracts the address (User_B) of final destination UD1 is trying to reach. |
| | | -It allocates address <172.19.64.51, 40002> for receiving media stream from V1. |
| | | -It initiates an outgoing call (C2) to User_B by asking sipserver to send an INVITE to User_B. This invite contains the address <172.19.64.51, 40002>. |
| | | -It also allocates a sip cross connect (XID=1) and binds C1 and C2 to XID=1. At this point sip cross connect XID=1 C1 and C2 as a back-to-back calls. It also stores XID=1 in the calls C1 and C2. This is to enable retrieving XID from Call ID. |
| 3 | V1 | V1 receives an incoming INVITE and accepts the call by sending an OK to UAM. The OK contains address <172.19.64.101, 10002> for receiving traffic from UAM. |
| 4 | SBU | SBU Gets OK (call accept event) on C2. It the performs following steps: |
| | | |
| | | -Receives the cross connect (XID=1) of which C2 is a member. |
| | | -Allocates an address for use of C2. <169.144.50.100, 40001> |
| | | -Instructs SipServer to send OK On call C2. This OK contains address <1169.144.50.100, 40001> for receiving media from UD1. |
| | | -Allocates a Session with ID (say, SID=100). This session ID is stored in Sip Cross connect XID=1. The SipCross connect with XID=1 is also added to the list of Cross-connects part of this session. At this time, there is just one SIP cross connect in the list. |
| | | -SBU then allocates a media channel to be used for receiving and sending data from UD1, say with CHID=0. |
| | | -SBU allocates a media channel to be used for sending and receiving data from V1, say CHID-1. |
| | | |
| | | -SBU then informs UMM to setup channels for sending and receiving data from V1 and UD1 as follows: |
| | | ≅ SBU informs UMM that channel = 0 should be used to send/receive data to/from UD1. This is done by asking UMM to associate channel=0 with send address <169.144.50.48, 50000> and Receive address <169.144.50.100, 40001> |
| | | |
| | | ≅ SBU informs UMM that channel = 1 should be used to send/receive data to/from V1. This is done by asking UMM to associate channel=0 with send address <172.19.64.101, 10001> and Receive address <172.19.64.51, 40002>. |
| | | |
| | | -SBU then instructs the UMM to construct a media cross connect by informing UMM that Channels CID=0 and CID=1 are part of same session SID=100. |
| | | |
| | | It should be noted that UMM is not informed (nor does it care) about the SIP calls C1 and C2. |
| 5 | UD1 | Receives an OK from UAM. It knows from OK that for sending audio media to UAM it must use the address <169.144.50.100, 40001>. |

The above table explains what happens for a pass through call. The following is the control flow when this call is converted into a conference call. In this case, say User_B conferences User_C at V2 into the call.

Further assume the following:
- IP address of V2 is 171.19.64.102

| **#** | **Loc** | **Action** |
|---|---|---|
| 6 | V1 | V1 # Sends an INVITE to Conference Host H (at V1) to initiate conference. The INVITE contains the multicast IP address <239.192.64.101, 10002> on which V1 would multicast its audio stream. |
| 7 | H | Host Gets an INVITE to start a conference call. It sends an OK back to V1. H also constructs a globally unique ID for this conference call. (say, GUID=900). |
| 8 | V1 | Refers UAM into the conference (with Replaces=C2). |
| 9 | H | Sends an INVITE to UAM with following information: |
| | | - GUID=900 |
| | | - Replaces=C1 |
| | | - Stream information for V1 (User_B) <239.192.64.101, 10002> |
| 10 | SBU | On getting Invite for a conference call (C3) SBU performs following: |
| | | -Sees that Replace ID = C2. It thus knows that V1 wants to bring POTS1 (UD1) into Conference GUID=100. |
| | | -It Retrieves the SIP Cross-connect XID=1 from C2. |
| | | -It retrieves the Session ID from the SipCross Connect, SID=100. And sets the GUID member of the Session to GUID=900. |
| | | -It Sets the GUID in Sip Cross-connect XID=1 to GUID=100. |
| | | -It releases the sip connection C2 by informing SipServer to send a Bye on C2. |
| | | -Removes C2 from SIP Cross-connect XID=1 and replaces it with C3. It also sets the SIP cross connect ID in C3 to XID=1. It also sets the XID member within C3 to point to XID=1. |
| | | -It allocates address <239.192.64.51, 40003> for transmitting data on behalf of UD1. |
| | | -It informs UMM to delete channel CID=1. Thus UMM will now stop transmitting media to address <172.19.64.101, 10001> and stop receiving media at address <172.19.64.51, 40002>. |
| | | -It sends an OK back to the Host. The OK contains information that everyone on the conference should send receive media streams from POTS1(UD1) on address <239.192.64.51, 40003>. |
| | | -SBU then instructs UMM to set up the right audio streams for conference (GUID=900) with V1 and UD1 present as participants as follows: |
| | | ≅ SBU informs that channel = 2 should be used to send/receive data to/from V1. Thus channel = 2 is associated with send address <239.192.64.51, 40003> and Receive address <239.192.64.101, 10002>. |
| | | ≅ SBU informs UMM to associate channel = 2 with Session SID=100. |
| | | ≅ SBU informs the UMM to set the retransmit address field for channel = 0 <239.192.64.51, 40003>. |
| | | It should again be noted that UMM is not aware of either the presence of SIP calls C1 and C3, nor does not it know that there is a conference call with GUID=900. Internally, UMM does not really look at the send address in channel = 2 to relay data from UD1 to conference. Rather, it looks at the retransmit address in the Channel ID - 2. |
| 11 | Host | Gets OK from UAMD. It sends a RE_INVITE to V1 indicating the presence of stream from User_A at <239.192.64.51, 40003>. |
| 12 | V1 | Refers User_C at V2 into the conference. |
| 13 | H | Sends an INVITE to V2 indicating presence of streams from User_A at and User_B. |
| 14 | V2 | V2 sends an OK. The OK contains the multicast IP address <239.192.64.102, 20001> on which V1 would multicast its audio stream. At this point, User_C can start listening to audio from User_A and User_B by registering to appropriate multicast addresses. |
| 15 | H | Sends a RE_INVITE to V1 and UAMD indicating presence of a new participant User_C sending audio at <239.192.64.102, 20001>. |
| 16 | V1 | Gets a RE_INVITE and sees that party User_C is now on the call. It sends an OK back to H. |
| 17 | SBU | Gets a RE_INVITE and sees that a new party User_C is also on conference call with GUID=900. It then performs following steps: |
| | | -Sends an OK back to the Host through sip server. |
| | | -Allocates a media channel CID = 3 for receiving traffic from User_C. |
| | | -Informs UMM to join media from User_C into the conference call identified by GUID=900 as follows: |
| | | ≅ SBU informs UMM that channel = 3 should be used to send/receive data to/from (User_C) at V2. Thus, channel = 3 is associated with send address <239.192.64.51, 40003> and Receive address |
| | | <239.192.64.102, 20001>. |
| | | ≅ SBU informs UMM to associate channel = 2 with Session SID=100. |
| | | |
| | | It should be noted again that all UMM knows is that there are three channels (CID=0,2 and 3) which all belong to the same session. UMM knows that CID=2 and 3 are streams from ViPr phone and CID=0 are from a unicast device. Thus, UMM reads multicast data from channels CID=2 (<239.192.64.102, 20001> and CID=3 (<239.192.64.101, 10002>) mixes them and sends it on channel = 0<169.144.50.48, 50000>. Also the data read from channel CID = 0, is retransmitted on retransmit address associated with CID=0 <239.192.64.51, 40003>. The details of how UMM performs this appropriate mixing are in a different section. |
| 18 | H | Gets the OK for re-invites sent in step 16. The conference call is now up. |

| | | |
|---|---|---|
| Initiating a conference with a user on unicast device. | | |

To add another ViPr user to the conference, steps 12 through 18 are repeated. Consider the steps that are required to another Unicast Device user say User_D on POTS2.

Assume the following:
S User_C on ViPr V2 decides to conference in User_D on POTS2 into the conference.

| **#** | **Loc** | **Action** |
|---|---|---|
| 19 | V2 | Refers User_D at POTS2 into the conference. |
| 20 | H | Sends an INVITE to UAM with following information: -User_A, User_B and User_C call along with the addresses on which they are generating media streams. -GUID = 900 |
| 21 | SBU | Gets Request for an incoming conference call (C4) with |
| | | -GUID = 900 |
| | | -To address = Address of User_D |
| | | It then performs following tasks: |
| | | -It allocates a SIP Cross-connect with ID, XID=2. |
| | | -It adds C4 to the sip cross connect XID=2. It also sets the XID member within C4 to XID=2. |
| | | -It searches all the Session structures to see if there is a session with GUID = 900. It finds that a session with ID=100 is associated with this conference call. |
| | | -It then adds SIP cross connect with XID=2, to the list of cross connects attached to Session SID = 100. At this point there are two SIP cross connects (XID =1,and XID =2) which are part of the SIP session SID=100. |
| | | -It also stores information within sip cross connect XID=2, to indicate it is associated with Session = 100. |
| | | -It allocates an address <169.144.50.51, 40011> for receiving traffic from User_D. |
| | | -It allocates a media channel CHID=4 for receiving traffic from User_D <239.192.64.51, 40012>. |
| | | -It initiates a connection C5 by sending an INVITE to UD1 for User_D. The INVITE contains the information that UD1 should send audio media streams for this call at <169.144.50.51, 40004>. |
| | | -It adds C5 to the sip cross connect of XID=2. Thus XID=2 is now connecting CID=4 and CID=5 as back to back SIP calls. |
| | | -It also sets XID member of C5 to XID=2. |
| 22 | UD1 | Receives INVITE from UAM and sends back an OK to UAM. It indicates in the OK that the address on which it should be sent data for call C5 is <169.144.50.48, 50002>. |
| 23 | SBU | Receives OK from UAM for C5. It then performs following steps: |
| | | -It retrieves the sip cross connect of which C5 is a member, XID=2. |
| | | -It retrieves the session from sip cross connect, SID=100. |
| | | -It then allocates an address <239.192.64.51, 40012> to relay data received on User_D into the conference, GUID=900. |
| | | -It then sends an OK to Host indicating that User_D would be generating traffic on <239.192.64.51, 40012>. |
| | | -It then allocates channels for receiving traffic User_A (CHID=5), User_B (CHID=6) and (CHID=7). |
| | | -It then asks UMM to add User_D into the conference as follows: |
| | | ≅ SBU informs UMM that channel = 4 should be used to send/receive data to/from User_D. Thus channel=3 is associated with send address <169.144.50.51, 40011> and Receive address <169.144.50.48, 50002>. |
| | | -SBU also informs UMM to set the retransmit address of CHID=4 to <239.192.64.51, 40012>. |
| | | ≅ SBU informs UMM that Channel =5, 6 and 7 should be used to exchange traffic with User_A, User_B and User_C. The following information is provided for these channels. |
| | | -CHID=5 [ Rx = <239.192.64.102, 20001>, Tx = <239.192.64.51, 40012> |
| | | -CHID=6 [ Rx = <239.192.64.101, 10001>, Tx = <239.192.64.51, 40012> |
| | | -CHID=7 [ Rx = <<239.192.64.51, 40012>, Tx = <239.192.64.51, 40012> |
| | | ≅ SBU informs UMM to associate channel =4, 5, 6, 7 with Session SID=100 |
| | | |
| | | {Please note that CHID=5 the information for receiving packets from User_A is same as one present in CHID=2 and would seem like a waste and troublesome but this has in fact has a desirable effect of not requiring any change in call manager and also eliminates needs for book keeping in SBU. Same holds for CHID=3 and CHID=6. The UMM would never receive anything on CHID=7 because multicasts are not received by the host which transmitted them.} |
| | | |
| | | In the UMM there are two channels CHID=2 and 5 which are referring to the same receive multicast address, now since both the channels belong to the same session = 100, it is not a problem. Since the UMM will not read packets from duplicate channels. However, if Channel=2 is deleted then UMM will go and read packets from CHID=5. |
| 24 | H | Host receives the OK on C5 (from UAM) with information added to receive audio streams from User_D. It Sends a Re-Invite to User_A, User_B and User_C indicating presence of a new stream from User_D. |
| 25 | SBU | Gets a REINVITE on C3 indicating presence of another user User_D transmitting on multicast address |
| | | - <239.192.64.51, 40012> |
| | | It then performs following tasks: |
| | | -Sends an OK back to host on C3 through sip server. |
| | | -It retrieves the sip cross connect of which C3 is a member, XID=1. |
| | | -It retrieves the session SID=100 from sip cross connect XID=1 |
| | | -It allocates channel CHID = 8 to receive audio from the User_D. |
| | | -It then instructs UMM to receive and mix traffic from User_D into the Session SID=100. as follows: |
| | | -SBU informs UMM that channel = 8 should be used to send/receive data to/from User_D. Thus channel=8 is associated with send address and Receive address <239.192.64.51, 40012>. |
| | | -SBU also sets the session ID for channel CHID=8 to SID=100. |
| | | [NOTE: Since UAMD programs the IP sockets to never receive packets it has transmitted on a multicast address, no traffic would be received on CHID=8. Which is exactly what is desired.]. |
| 26 | V1 and V2 | Sends an OK to re-invite sent by Host |
| 27 | H | Receives OK from all the participants, the conference call now has 4 parties on call. Two of which are unicast devices. |

| | | |
|---|---|---|
| Flow of control for adding second unicast user to a conference. | | |

UMM implements the functionality for cross-connecting media streams as well as implementing the audio mixing functionality.

### Deployment Scenario 1:

Referring to figure 4, this scenario covers two cases:

A ViPr user in a multi-party ViPr audio/video conference adding a unicast audio-only telephone user to the conference:

In this case, ViPr users in multi-party ViPr conference decide to add a unicast telephone user to the conference. As a result, one of the participants initiates a call to the destination telephone number. The ViPr SIP server redirects the call to the ViPr UAM. The ViPr UAM terminates the ViPr audio-only call and establishes a back-to-back call to the destination telephone via the telephony gateway.

Once the call is established, the ViPr UAM converts the unicast G.711/G.722 audio stream received from the telephone into a PMP/multicast stream and forwards it to the ViPr terminals without any transcoding. On the other hand, the ViPr UAM performs transcoding and mixing of the wideband 16bit/16KHz PCM ViPr audio streams received from the various ViPr terminals into one G.711 or G.722 unicast audio stream and forwards it to the telephone destination.

A ViPr user in point-to-point audio-only conference with a telephone user adding another ViPr user to the conference:

In this case, a ViPr user (V1) in point-to-point audio-only call with a telephone user (T) decides to add another ViPr user (V2) to the conference. As a result, the ViPr user V1 initiates an audio/video call to the destination ViPr user V2. The ViPr system tears down the established point-to-point call between V1 and the ViPr UAM and re-establishes a PMP/multicast call between V1, V2 and the ViPr UAM.

The ViPr UAM terminates the new ViPr audio/video call and bridges it to the already established back-to-back telephone call. Throughout this process, the telephone call remains active and the switching is transparent to the telephone user.

Once the call is established, the ViPr UAM converts the unicast G.711/G.722 audio stream received from the telephone into a PMP/multicast stream and forwards it to the ViPr terminals without any transcoding. On the other hand, the ViPr UAM performs transcoding and mixing of the wideband 16bit/16KHz PCM ViPr audio streams received from the various ViPr terminals into one G.711 or G.722 unicast audio stream and forwards it to the telephone destination.

ViPr uses Session Initiation Protocol (SIP) as a means of establishing, modifying and clearing multi-stream multi-media sessions. The UAM will add conferencing capabilities between the ViPr terminals and telephone users (i.e. PSTN, Mobile phones and SIP phones) by converting upstream unicast voice-only telephone streams into point-to-multipoint streams (i.e. PMP-SVC or IP Multicast) and converting downstream ViPr multicast/PMP audio streams to unicast telephone voice-only streams as well as performing downstream audio transcoding of ViPr audio from wideband 16bit/16KHz PCM encoding to G.711 or G.722.

### Deployment Scenario 2:

Referring to figure 5, this scenario covers two cases:
A telephone user calling a ViPr user:

In this case, a telephone user initiates a call (audio only) to a ViPr user. The telephony gateway redirects the call to the ViPr UAM. The ViPr UAM terminates the telephone call and establishes a back-to-back ViPr audio-only call to the destination ViPr terminal.

Once the call is established, the ViPr UAM forwards the G.711/G.722 audio stream received from the telephone to the ViPr terminal without any transcoding. On the other hand, the ViPr UAM performs transcoding of the ViPr audio stream from wideband 16bit/16KHz PCM to G.711 or G.722 and forwards it to the telephone destination.

### A ViPr user calling a telephone user:

In this case, a ViPr user initiates a call to a telephone user. The ViPr SIP server redirects the call to the ViPr UAM. The ViPr UAM terminates the ViPr audio-only call and establishes a back-to-back PSTN call to the destination telephone via the telephony gateway. Transcoding is done in the same way as described in the previous paragraph.

Figure 6 gives a typical usage context for UAM. The features provided by the UAM are the following.

### Feature 1

Say that ViPr V1 and V2 are in a point-to-point call and they wish to engage Unicast Device UD1 in a conference call. Put in other words the intent is to form a conference call with UD1, V1 and V2 in conference. Say user at V1 requests that user at UD1 be joined into the conference call with V1 and V2 as other parties. This request is forwarded by one of the SIP servers to the UAM.
UAM then performs the following tasks:
- It joins the conference call on behalf of UD1. Call this conference call C1.
- It also makes a point-to-point call with the Unicast Device. Call this conference call C2.
- It relays audio data received on C2 to C1.
- It accepts the audio data from V1 and V2 parties in call C2, mixes and forwards this data to UD.

### Feature 2

Consider the case where vipr-net in the figure above is ATM and UD-net is an IP network. Also, suppose that it is desired that to the extent possible only SVCs be used over the ATM network for audio rather than LANE/CLIP. This could be for security concerns or for performance issues.

In this case, if a ViPr V1 on vipr-net wishes to engage a unicast device (UD1) in an audio conversation, than UAM is used to provide functionality to use SVC in the ATM network and IP in the IP network.

To do this **all call** from V1 to UD1 is broken into two calls from V1 to UAMD and from UAMD to V2.

The configuration required for features supported by UAM can be broken into following categories:
- Configuration for ViPr to UD calls.
- Configuration for UD to ViPr calls.
- General configuration

### General configuration

The B2BUA SIP UA is made to run on any desired port (other than 5060). This is done by modifying the vipr.ini file to include following parameter:
SIP_Port=7070[any valid port number]

### Configuration for ViPr to UD calls

For a typical ViPr call when a user dials a "number" its "call-request" is sent to SIP Server which than forwards it to the appropriate destinations. However, this case is different. In this case, when a user says I wish to talk to unicast device (UD1) the SIP Server forwards the request to UAM. In addition, it also puts information in the request to identify that this call should be forwarded to UD1. Thus, the SIP Server is programmed to route calls made to the SIP-URIs serviced by the UAM devices to the appropriate UAMD Server.

It is also possible to specify a default unicast device SIP address to which to forward all calls received by the UAM. This default address can be specified in vipr.ini file by adding following lines:
UD_SERVER_ADDRESS=169.144.50.48
X_FORWARD_AVAILABLE=0

It should be noted that when a call is made from a unicast device to a ViPr, the call has to be delivered to the UAM. To do this, appropriate configuration is performed at unicast device, please refer to unicast device specific documentation for this.

### Configuration for UD to ViPr call

The calls originating at the UD for a ViPr are routed to the UAM. One way to achieve this is by programming the UD to direct/forward all calls to UAM. Also, the eventual destination of the calls (say V1) is specified in the call request to UAM. Typically, this address will be the To field in the SIP message. These configurations are performed at the UD or the SIP Server.

In addition, when UAM receives a call request from a UD, it forwards it to a gateway Marshall server for performing sanity checks on the called party. This gateway address can be specified in the vipr.ini file
GatewayMarshallServer=sip.eng.fore.com:5065

### List of Acronyms

- ATM: Asynchronous Transfer Mode
- ISDN: Integrated Services Digital Network
- IP: Internet Protocol
- LAN: Local Area Network
- MC: Multicast (IP)
- MCMU: Media Cross Connect and Mixer
- MCU: Media Conferencing Unit
- PBX: Private Branch Exchange (private telephone switchboard)
- PCM: Pulse-Code Modulation
- PMP: Point-to-Multipoint (ATM)
- POTS: "Plain Old Telephone System"
- PRI: Primary Rate Interface (ISDN)
- PSTN: Public Switched Telephone Network
- SBU: SIP back-to-back user agent
- SIP: Session Initiation Protocol
- SVC: Switched Virtual Circuit (ATM)
- UAM: Unicast Audio Mixer
- ViPr™: Virtual Presence System
- WAN: Wide Area Network

Although the invention has been described in detail in the foregoing embodiments for the purpose of illustration, it is to be understood that such detail is solely for that purpose and that variations can be made therein by those skilled in the art without departing from the spirit and scope of the invention except as it may be described by the following claims.

## Claims

1. A teleconferencing system comprising:
a network;
a content node having content and an address in the network and in communication with the network; and
a first user node and a second user node in communication with each other through the network to form a conference, the first user node able to provide the address of the content node through the network to the first and second nodes so the first and second nodes can both access the content of the content node during the conference.

2. A system as described in Claim 1 wherein the first user node sends a message having the address to the second user node.

3. A system as described in Claim 2 wherein the address includes a URL.

4. A system as described in Claim 3 wherein the message includes security parameters necessary for the second user node to access the content.

5. A system as described in Claim 4 wherein the content includes an image.

6. A system as described in Claim 5 wherein the message is a SIP/NOTIFY message which carries signaling containing the URL and security parameters.

7. A system as described in Claim 6 wherein the content includes a video stream.

8. A system as described in Claim 7 including a third user node in the conference which also receives the SIP/NOTIFY message from the first user node to access the content.

9. A system as described in Claim 8 wherein the SIP/NOTIFY message from the first user node allows the second and third user nodes to access the content without any intervention by the second and third user nodes.

10. A teleconferencing node for a network with other nodes and a content node having content comprising:
a network interface which communicates with the other nodes to form a conference for the nodes to talk to each other and view each other live; and
a controller which provides the address of the content node through the network to the other nodes so the other nodes can both access the content of the content node during the conference.

11. A method for providing a teleconference call comprising the steps of:
providing an address of a content node having content and an address in a network in communication with the network by a first user node in communication with the network through the network to a second user node in communication with the network; and
accessing the content of the content node by the first and second nodes during a live conference call between the first and second nodes through the network.

12. A method as described in Claim 11 wherein the providing step includes the step of sending a message having the address to the second user node.

13. A method as described in Claim 12 wherein the sending step includes the step of sending the message having the address which includes a URL to the second user node.

14. A method as described in Claim 13 wherein the sending step includes the step of sending the message which includes security parameters necessary for the second user node to access the content to the second user node.

15. A method as described in Claim 14 wherein the providing step includes the step of providing the address of the content node having content which includes an image.

16. A method as described in Claim 15 wherein the sending step includes the step of sending the message which includes a SIP/NOTIFY message which carries signaling containing the URL and security parameters.

17. A method as described in Claim 18 wherein the providing step includes the step of providing the address of the content node having content which includes a video stream.

18. A method as described in Claim 17 including the step of receiving by a third user node in the conference the SIP/NOTIFY message from the first user node to access the content.

19. A method as described in Claim 18 wherein the sending the message step includes the step of sending the SIP/NOTIFY message from the first user node which allows the second and third user nodes to access the content without any intervention by the second and third user nodes.
